(19)

**Europäisches Patentamt**
**European Patent Office**
**Office européen des brevets**

(11) **EP 1 907 986 B1**

(12) **EUROPEAN PATENT SPECIFICATION**

(45) Date of publication and mention
of the grant of the patent:
**24.12.2008 Bulletin 2008/52**

(51) Int Cl.:
*G06K 9/52* (2006.01)          *G07D 7/12* (2006.01)
*G06K 19/14* (2006.01)

(21) Application number: **06765021.8**

(86) International application number:
**PCT/GB2006/002686**

(22) Date of filing: **19.07.2006**

(87) International publication number:
**WO 2007/012814 (01.02.2007 Gazette 2007/05)**

(54) **SIGNATURE FOR ACCESS TOKENS**

SIGNATUR FÜR ZUGANGS-TOKEN

SIGNATURE POUR DES JETONS D'ACCES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.07.2005  GB 0515465
27.07.2005  US 702897 P**

(43) Date of publication of application:
**09.04.2008  Bulletin 2008/15**

(73) Proprietor: **INGENIA TECHNOLOGY LIMITED
20 Farringdon Road
London EC1M 3AP (GB)**

(72) Inventors:
• **COWBURN, Russell, P.
London SW7 2BW (GB)**
• **BUCHANAN, James, David, Ralph
London S19 2BP (GB)**

(74) Representative: **Meldrum, David James et al
D Young & Co
120 Holborn
London EC1N 2DY (GB)**

(56) References cited:
**WO-A-20/04025549          US-A1- 2004 199 765
US-A1- 2005 060 555**

• WILKES ET AL: "FIGHTING FRAUD: DOCUMENT BIOMETRICS" MATERIALS WORLD, INSTITUTE OF METALS, LONDON, GB, vol. 12, no. 12, December 2004 (2004-12), pages 29-30, XP009073167 ISSN: 0967-8638
• HAIST T ET AL: "Optical detection of random features for high security applications" OPTICS COMMUNICATIONS, NORTH-HOLLAND PUBLISHING CO. AMSTERDAM, NL, vol. 147, no. 1-3, 1 February 1998 (1998-02-01), pages 173-179, XP004118061 ISSN: 0030-4018
• PAPPU R ET AL: "Physical one-way functions" SCIENCE, AMERICAN ASSOCIATION FOR THE ADVANCEMENT OF SCIENCE,, US, vol. 297, no. 5589, September 2002 (2002-09), pages 2026-2030, XP002285061 ISSN: 0036-8075

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to access, and in particular but not exclusively to authenticity verification techniques for access to sensitive information, for example medical or financial information.

In many applications where data is stored centrally for a number of users, there can be concerns over the privacy of that data. For example, a bank may have a need to store details of a customer's general financial circumstances, a medical agency may have a need to store details of a patient's medical history, or a company may have a need to store details of an employee. This data can often be accessed by persons working for the entity in a relatively uncontrolled fashion, thereby creating problems such as the recent well-publicised leaks of financial information relating to bank customers in the UK from bank call centres located outside of the UK.

These and other privacy concerns can make it difficult for a bank or other financial service provider to obtain new customers and can also lead to situations where important medical information is withheld by a patient out of a fear of that information being distributed more widely than necessary.

A data packaging technique using biometric signatures has been discussed in Gershenfeld, Science 297 (5589): 20026-2030, September 20 2002). The technique disclosed thereby uses a very specific optically transparent three-dimensional access token.

## SUMMARY

The present invention has been made, at least in part, in consideration of problems and drawbacks of conventional systems.

The present invention has at least in part resulted from the inventor's work on applying authentication techniques using tokens made of magnetic materials, where the uniqueness is provided by unreproducible defects in the magnetic material that affect the token's magnetic response (as detailed in PCT/GB03/03917, Cowburn). As part of this work, magnetic materials were fabricated in barcode format, i.e. as a number of parallel strips. As well as reading the unique magnetic response of the strips by sweeping a magnetic field with a magnetic reader, an optical scanner was built to read the barcodes by scanning a laser beam over the barcode and using contrast from the varying reflectivity of the barcode strips and the article on which they where formed. This information was complementary to the magnetic characteristic, since the barcode was being used to encode a digital signature of the unique magnetic response in a type of well known self authentication scheme, for example as also described above for banknotes (see for example, Kravolec "Plastic tag makes foolproof ID", Technology research news, 2 October 2002).

To the surprise of the inventor, it was discovered when using this optical scanner that the paper background material on which the magnetic chips were supported gave a unique optical response to the scanner. On further investigation, it was established that many other unprepared surfaces, such as surfaces of various types of cardboard and plastic, show the same effect. Moreover, it has been established by the inventor that the unique characteristic arises at least in part from speckle, but also includes non-speckle contributions.

It has thus been discovered that it is possible to gain all the advantages of speckle based techniques without having to use a specially prepared token or specially prepare an article in any other way. In particular, many types of paper, cardboard and plastics have been found to give unique characteristic scattering signals from a coherent light beam, so that unique digital signatures can be obtained from almost any paper document or cardboard packaging item.

The above-described known speckle readers used for security devices appear to be based on illuminating the whole of a token with a laser beam and imaging a significant solid angle portion of the resultant speckle pattern with a CCD (see for example GB 2 221 870 and US 6,584,214), thereby obtaining a speckle pattern image of the token made up of a large array of data points.

The reader used by the inventor does not operate in this manner. It uses four single channel detectors (four simple phototransistors) which are angularly spaced apart to collect only four signal components from the scattered laser beam. The laser beam is focused to a spot covering only a very small part of the surface. Signal is collected from different localised areas on the surface by the four single channel detectors as the spot is scanned over the surface. The characteristic response from the article is thus made up of independent measurements from a large number (typically hundreds or thousands) of different localised areas on the article surface. Although four phototransistors are used, analysis using only data from a single one of the phototransistors shows that a unique characteristic response can be derived from this single channel alone! However, higher security levels are obtained if further ones of the four channels are included in the response.

Viewed from a first aspect, the present invention provides a data access system. The system can comprise a data record associated with a stored access token signature and a signature generator, operable to scan an access token to create a signature for the access token, the signature being based upon an intrinsic property of the access token. The system can also comprise a comparator for comparing the created signature with the stored signature. The system can be operable to make the data record available in the event of a match between the stored signature and the created signature. Thus secure access to data, such as data which may be considered to be sensitive or private, can be controlled using an access token in the possession of an individual or entity to whom the data record relates. The data can be at least one of data describing financial information, data describing medical information, data describing employee information and data describing legal information.

In one embodiment, the signature for the access token represents the only access method to the respective data record. Thus a user of the system can be assured that the data is not open to access by any other person, thereby allaying data privacy fears. In some examples, additional access methods such as systems administrator access to enable lost access token signatures to be replaced, regulatory access and/or investigative (such as may be ordered for a criminal investigation) access. Thus the user may still be assured that the data is inaccessible except for certain well-defined purposes and that the chances of their data being misused or accessed without their permission are very low.

In some examples, the data record can be written to without a matching access token signature. Thus an entity holding the data can add data to the data record for a given individual, but cannot re-access that data without the user's access token.

In some embodiments, determining a match between the created signature and a stored signature indicates that the same access token has been used to create both signatures. Thus the only way to access the data is by using the same access token as was used to create the signature recorded in the database.

In one embodiment, the signature generator comprises: a reading volume arranged to receive the written entitlement token; a source for generating a coherent light beam; a detector arrangement for collecting a set of data points from signals obtained when the coherent light beam scatters from the reading volume, wherein different ones of the data points relate to scatter from different parts of the reading volume; and a data acquisition and processing module operable to determine a signature of the written entitlement token from the set of data points.

In some examples, the access token can be an arbitrary item, which can be selected by a user thereof. Thus the token need not be a token issued for the purpose of accessing the data, and can in fact be an item which as no visible connection with the data held in the database.

In some examples, the comparator is operable to split the generated signature into blocks of contiguous data and to perform a comparison operation between each block and respective blocks of ones of the stored signatures; and to compare an attribute of a comparison result therefrom to an expected attribute of the comparison to determine a compensation value for use in determining the validation result to compensate for damage to the access token and/or non-linearities in the signature creation.

In some examples, the signature can be used to package an access key using, for example a bitwise XOR between the access key (with added error correction code) and the signature. The access key can be retrieved at the database by XORing the received data with the signature - this will return the access key with the error correction code. The error correction code can then be applied to undo any errors created by the wrapping and unwrapping procedures, for example due to non-identicality between the signatures of the access token. Thus the access key can be recovered and used to access data records in the database.

Viewed from a second aspect, the present invention provides a method for accessing a data record. The method can comprise scanning an access token to create a signature for the access token, the signature being based upon an intrinsic property of the access token and comparing the signature to a database of stored signatures, each stored signature having a data record associated therewith. Further, the method can also comprise providing access to the data record associated with a given stored signature in the event of a match between the said created signature and the stored signature. Thus the data stored in the data record can be secured against unauthorised access by the use of an access token which forms the search query for extracting the data record from a data record store or database. The data may be data which is considered sensitive or private and may include one or more of data describing financial information, data describing medical information, data describing employee information and data describing legal information.

It is possible to make a workable reader when the detector arrangement consists of only a single detector channel. Other embodiments use a detector arrangement that comprises a group of detector elements angularly distributed and operable to collect a group of data points for each different part of the reading volume, preferably a small group of a few detector elements. Security enhancement is provided when the signature incorporates a contribution from a comparison between data points of the same group. This comparison may conveniently involve a cross-correlation.

Although a working reader can be made with only one detector channel, there are preferably at least 2 channels. This allows cross-correlations between the detector signals to be made, which is useful for the signal processing associated with determining the signature. It is envisaged that between 2 and 10 detector channels will be suitable for most applications with 2 to 4 currently being considered as the optimum balance between apparatus simplicity and security.

The detector elements are advantageously arranged to lie in a plane intersecting the reading volume with each member of the pair being angularly distributed in the plane in relation to the coherent beam axis, preferably with one or more detector elements either side of the beam axis. However, non-planar detector arrangements are also acceptable.

The use of cross-correlations of the signals obtained from the different detectors has been found to give valuable data for increasing the security levels and also for allowing the signatures to be more reliably reproducible over time. The utility of the cross-correlations is somewhat surprising from a scientific point of view, since speckle patterns are inherently uncorrelated (with the exception of signals from opposed points in the pattern). In other words, for a speckle pattern there will by definition be zero cross-correlation between the signals from the different detectors so long as they are not arranged at equal magnitude angles offset from the excitation location in a common plane intersecting the excitation location. The value of using cross-correlation contributions therefore indicates that an important part of the scatter signal is not speckle. The non-speckle contribution could be viewed as being the result of direct scatter, or a diffuse scattering contribution, from a complex surface, such as paper fibre twists. At present the relative importance of the speckle and non-speckle scatter signal contribution is not clear. However, it is clear from the experiments performed to date that the detectors are not measuring a pure speckle pattern, but a composite signal with speckle and non-speckle components.

Incorporating a cross-correlation component in the signature can also be of benefit for improving security. This is because, even if it is possible using high resolution printing to make an article that reproduces the contrast variations over the surface of the genuine article, this would not be able to match the cross-correlation coefficients obtained by scanning the genuine article.

In the one embodiment, the detector channels are made up of discrete detector components in the form of simple phototransistors. Other simple discrete components could be used such as PIN diodes or photodiodes. Integrated detector components, such as a detector array could also be used, although this would add to the cost and complexity of the device.

From initial experiments which modify the illumination angle of the laser beam on the article to be scanned, it also seems to be preferable in practice that the laser beam is incident approximately normal to the surface being scanned in order to obtain a characteristic that can be repeatedly measured from the same surface with little change, even when the article is degraded between measurements. At least some known readers use oblique incidence (see GB 2 221 870). Once appreciated, this effect seems obvious, but it is clearly not immediately apparent as evidenced by the design of some prior art speckle readers including that of GB 2 221 870 and indeed the first prototype reader built by the inventor. The inventor's first prototype reader with oblique incidence functioned reasonably well in laboratory conditions, but was quite sensitive to degradation of the paper used as the article. For example, rubbing the paper with fingers was sufficient to cause significant differences to appear upon re-measurement. The second prototype reader used normal incidence and has been found to be robust against degradation of paper by routine handling, and also more severe events such as: passing through various types of printer including a laser printer, passing through a photocopier machine, writing on, printing on, deliberate scorching in an oven, and crushing and reflattening.

It can therefore be advantageous to mount the source so as to direct the coherent beam onto the reading volume so that it will strike an article with near normal incidence. By near normal incidence means ±5, 10 or 20 degrees. Alternatively, the beam can be directed to have oblique incidence on the articles. This will usually have a negative influence in the case that the beam is scanned over the article.

It is also noted that in the readers described in the detailed description, the detector arrangement is arranged in reflection to detect radiation back scattered from the reading volume. However, if the article is transparent, the detectors could be arranged in transmission.

A signature generator can be operable to access the database of previously recorded signatures and perform a comparison to establish whether the database contains a match to the signature of an article that has been placed in the reading volume. The database may be part of a mass storage device that forms part of the reader apparatus, or may be at a remote location and accessed by the reader through a telecommunications link. The telecommunications link may take any conventional form, including wireless and fixed links, and may be available over the internet. The data acquisition and processing module may be operable, at least in some operational modes, to allow the signature to be added to the database if no match is found.

When using a database, in addition to storing the signature it may also be useful to associate that signature in the database with other information about the article such as a scanned copy of the document, a photograph of a passport holder, details on the place and time of manufacture of the product, or details on the intended sales destination of vendable goods (e.g. to track grey importation).

The invention allows identification of articles made of a variety of different kinds of materials, such as paper, cardboard and plastic.

By intrinsic structure we mean structure that the article inherently will have by virtue of its manufacture, thereby distinguishing over structure specifically provided for security purposes, such as structure given by tokens or artificial fibres incorporated in the article.

By paper or cardboard we mean any article made from wood pulp or equivalent fibre process. The paper or cardboard may be treated with coatings or impregnations or covered with transparent material, such as cellophane. If long-term stability of the surface is a particular concern, the paper may be treated with an acrylic spray-on transparent coating, for example.

Data points can thus be collected as a function of position of illumination by the coherent beam. This can be achieved either by scanning a localised coherent beam over the article, or by using directional detectors to collect scattered light from different parts of the article, or by a combination of both.

The signature is envisaged to be a digital signature in most applications. Typical sizes of the digital signature with current technology would be in the range 200 bits to 8k bits, where currently it is preferable to have a digital signature size of about 2k bits for high security.

A further implementation of the invention can be performed without storing the digital signatures in a database, but rather by labelling the entitlement token with a label derived from the signature, wherein the label conforms to a machine-readable encoding protocol.

BRIEF DESCRIPTION OF THE FIGURES

Specific embodiments of the present invention will now be described by way of example only with reference to the accompanying figures in which:

Figure 1 is a schematic side view of an example of a reader apparatus;

Figure 2 is a schematic perspective view showing how the reading volume of the reader apparatus of Figure 1 is sampled;

Figure 3 is a block schematic diagram of the functional components of the reader apparatus of Figure 1;

Figure 4 is a perspective view of the reader apparatus of Figure 1 showing its external form;

Figure 5 is a perspective view showing another example of an external form for the reader of Figure 1;

Figure 6A is schematic cross-sectional view through an alternative reader configuration;

Figure 6B is a perspective view of another alternative reader configuration;

Figure 6C is a perspective view of another alternative reader configuration;

Figure 7A shows schematically in side view an alternative imaging arrangement for a reader based on directional light collection and blanket illumination;

Figure 7B shows schematically in plan view the optical footprint of a further alternative imaging arrangement for a reader in which directional detectors are used in combination with localised illumination with an elongate beam;

Figure 8A is a microscope image of a paper surface with the image covering an area of approximately 0.5 x 0.2 mm;

Figure 8B is a microscope image of a plastic surface with the image covering an area of approximately 0.02 x 0.02 mm;

Figure 9A shows raw data from a single photodetector using the reader of Figure 1 which consists of a photodetector signal and an encoder signal;

Figure 9B shows the photodetector data of Figure 9A after linearisation with the encoder signal and averaging the amplitude;

Figure 9C shows the data of Figure 9B after digitisation according to the average level;

Figure 10 is a flow diagram showing how a signature of an article is generated from a scan;

Figure 11 is a flow diagram showing how a signature of an article obtained from a scan can be verified against a signature database;

Figure 12 is a flow diagram showing how the verification process of Figure 11 can be altered to account for non-idealities in a scan;

Figure 13A shows an example of cross-correlation data data gathered from a scan;

Figure 13b shows an example of cross-correlation data data gathered from a scan where the scanned article is distorted;

Figure 13C shows an example of cross-correlation data gathered from a scan where the scanned article is scanned at non-linear speed;

Figure 14 shows a schematic representation of an article for verification;

Figure 15 is a schematic cut-away perspective view of a multi-scan head scanner;

Figure 16 is a schematic cut-away perspective view of a multi-scan head position scanner;

Figure 17 shows schematically an example of a system for accessing data;

Figure 18 shows schematically another example of a system for accessing data; and

Figure 19 shows schematically another example of a system for accessing data.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within and scope of the present invention as defined by the appended claims.

DESCRIPTION OF PARTICULAR EMBODIMENTS

For providing security and authorisation services in environments such as an e-commerce environment, a system for uniquely identifying a physical item can be used to reduce possibilities for fraud, and to enhance both actual and perceived reliability of the e-commerce system, for both provider and end-users.

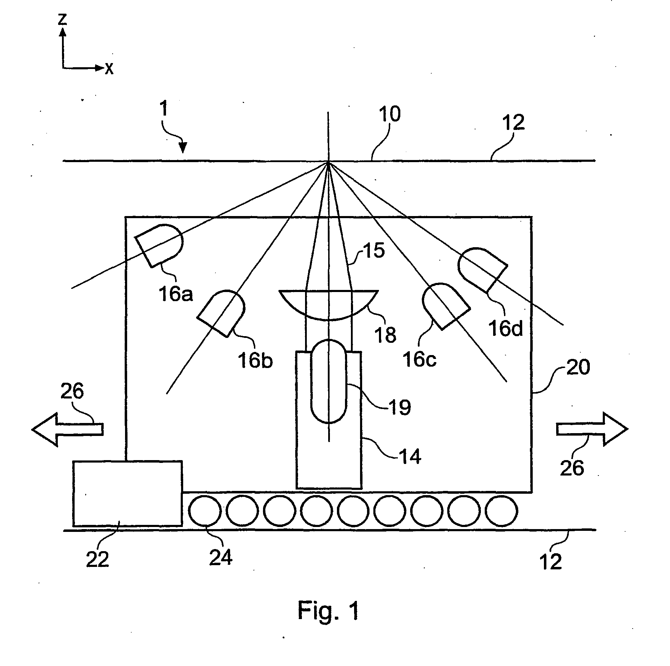

Examples of systems suitable for performing such item identification will now be described with reference to Figures 1 to 11.

Figure 1 shows a schematic side view of a first example of a reader apparatus 1. The optical reader apparatus 1 is for measuring a signature from an article (not shown) arranged in a reading volume of the apparatus. The reading volume is formed by a reading aperture 10 which is a slit in a housing 12. The housing 12 contains the main optical components of the apparatus. The slit has its major extent in the x direction (see inset axes in the drawing). The principal optical components are a laser source 14 for generating a coherent laser beam 15 and a detector arrangement 16 made up of a plurality of k photodetector elements, where k = 4 in this example, labelled 16a, 16b, 16c and 16d. The laser beam 15 is focused by a cylindrical lens 18 into an elongate focus extending in the y direction (perpendicular to the plane of the drawing) and lying in the plane of the reading aperture. In one example reader, the elongate focus has a major axis dimension of about 2 mm and a minor axis dimension of about 40 micrometres. These optical components are contained in a subassembly 20. In the present example, the four detector elements 16a...d are distributed either side of the beam axis offset at different angles in an interdigitated arrangement from the beam axis to collect light scattered in reflection from an article present in the reading volume. In the present example, the offset angles are -70, -20, +30 and +50 degrees. The angles either side of the beam axis are chosen so as not to be equal so that the data points they collect are as independent as possible. All four detector elements are arranged in a common plane. The photodetector elements 16a..d detect light scattered from an article placed on the housing when the coherent beam scatters from the reading volume. As illustrated, the source is mounted to direct the laser beam 15 with its beam axis in the z direction, so that it will strike an article in the reading aperture at normal incidence.

Generally it is desirable that the depth of focus is large, so that any differences in the article positioning in the z direction do not result in significant changes in the size of the beam in the plane of the reading aperture. In the present example, the depth of focus is approximately 0.5 mm which is sufficiently large to produce good results where the position of the article relative to the scanner can be controlled to some extent. The parameters, of depth of focus, numerical aperture and working distance are interdependent, resulting in a well known trade off between spot size and depth of focus.

A drive motor 22 is arranged in the housing 12 for providing linear motion of the optics subassembly 20 via suitable bearings 24 or other means, as indicated by the arrows 26. The drive motor 22 thus serves to move the coherent beam linearly in the x direction over the reading aperture 10 so that the beam 15 is scanned in a direction transverse to the major axis of the elongate focus. Since the coherent beam 15 is dimensioned at its focus to have a cross-section in the xz plane (plane of the drawing) that is much smaller than a projection of the reading volume in a plane normal to the coherent beam, i.e. in the plane of the housing wall in which the reading aperture is set, a scan of the drive motor 22 will cause the coherent beam 15 to sample many different parts of the reading volume under action of the drive motor 22.

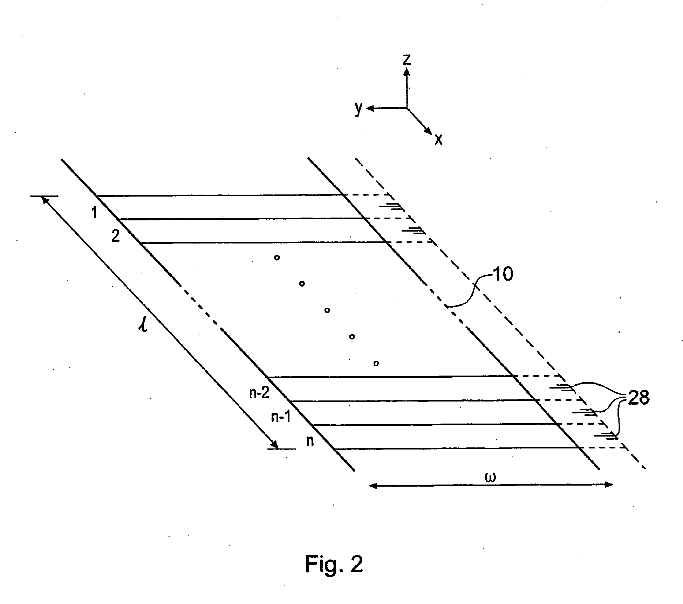

Figure 2 is included to illustrate this sampling and is a schematic perspective view showing how the reading area is sampled n times by scanning an elongate beam across it. The sampling positions of the focused laser beam as it is scanned along the reading aperture under action of the drive is represented by the adjacent rectangles numbered 1 to n which sample an area of length 'l' and width 'w'. Data collection is made so as to collect signal at each of the n positions as the drive is scanned along the slit. Consequently, a sequence of k x n data points are collected that relate to scatter from the n different illustrated parts of the reading volume.

Also illustrated schematically are optional distance marks 28 formed on the underside of the housing 12 adjacent the slit 10 along the x direction, i.e. the scan direction. An example spacing between the marks in the x-direction is 300 micrometres. These marks are sampled by a tail of the elongate focus and provide for linearisation of the data in the x direction in situations where such linearisation is required, as is described in more detail further below. The measurement is performed by an additional phototransistor 19 which is a directional detector arranged to collect light from the area of the marks 28 adjacent the slit.

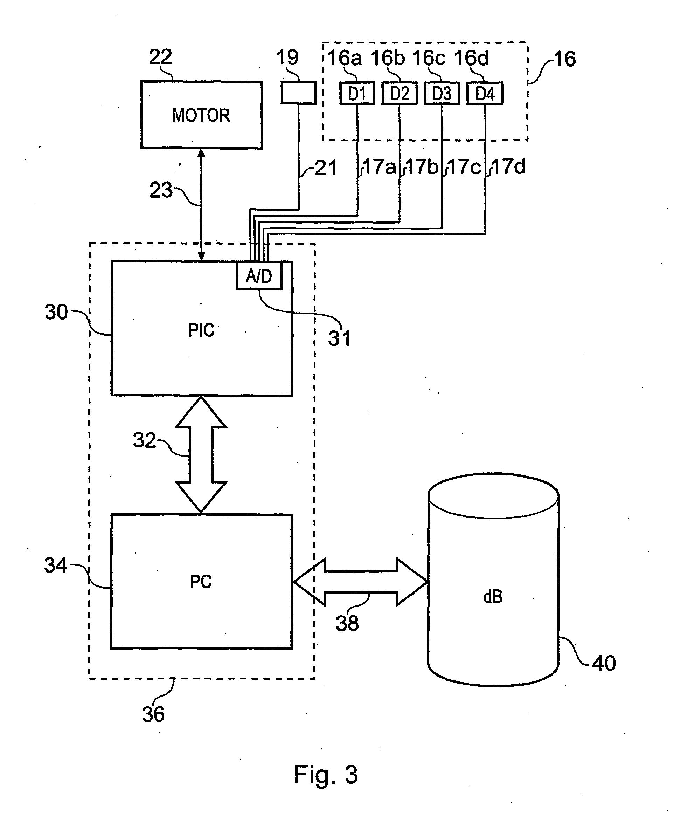

In alternative examples, the marks 28 can be read by a dedicated encoder emitter/detector module 19 that is part of the optics subassembly 20. Encoder emitter/detector modules are used in bar code readers. In one example, an Agilent HEDS-1500 module that is based on a focused light emitting diode (LED) and photodetector can be used. The module signal is fed into the PIC ADC as an extra detector channel (see discussion of Figure 3 below).

With an example minor dimension of the focus of 40 micrometers, and a scan length in the x direction of 2 cm, n=500, giving 2000 data points with k = 4. A typical range of values for k x n depending on desired security level, article type, number of detector channels 'k' and other factors is expected to be $100 < k \times n < 10,000$. It has also been found that increasing the number of detectors k also improves the insensitivity of the measurements to surface degradation of the article through handling, printing etc. In practice, with the prototypes used to date, a rule of thumb is that the total number of independent data points, i.e. $k \times n$, should be 500 or more to give an acceptably high security level with a wide variety of surfaces. Other minima (either higher or lower) may apply where a scanner is intended for use with only one specific surface type or group of surface types.

Figure 3 is a block schematic diagram of functional components of the reader apparatus. The motor 22 is connected to a programmable interrupt controller (PIC) 30 through an electrical link 23. The detectors 16a...d of the detector module 16 are connected through respective electrical connection lines 17a...d to an analogue-to-digital converter (ADC) that is part of the PIC 30. A similar electrical connection line 21 connects the marker reading detector 19 to the PIC 30. It will be understood that optical or wireless links may be used instead of, or in combination with, electrical links. The PIC 30 is interfaced with a personal .computer (PC) 34 through a data connection 32. The PC 34 may be a desktop or a laptop. As an alternative to a PC, other intelligent devices may be used, for example a personal digital assistant (PDA) or a dedicated electronics unit. The PIC 30 and PC 34 collectively form a data acquisition and processing module 36 for determining a signature of the article from the set of data points collected by the detectors 16a...d.

In some examples, the PC 34 can have access through an interface connection 38 to a database (dB) 40. The database 40 may be resident on the PC 34 in memory, or stored on a drive thereof. Alternatively, the database 40 may be remote from the PC 34 and accessed by wireless communication, for example using mobile telephony services or a wireless local area network (LAN) in combination with the internet. Moreover, the database 40 may be stored locally on the PC 34, but periodically downloaded from a remote source. The database may be administered by a remote entity, which entity may provide access to only a part of the total database to the particular PC 34, and/or may limit access the database on the basis of a security policy.

The database 40 can contain a library of previously recorded signatures. The PC 34 can be programmed so that in use it can access the database 40 and performs a comparison to establish whether the database 40 contains a match to the signature of the article that has been placed in the reading volume. The PC 34 can also be programmed to allow a signature to be added to the database if no match is found.

The way in which data flow between the PC and database is handled can be dependent upon the location of the PC and the relationship between the operator of the PC and the operator of the database. For example, if the PC and reader are being used to confirm the authenticity of an article, then the PC will not need to be able to add new articles to the database, and may in fact not directly access the database, but instead provide the signature to the database for comparison. In this arrangement the database may provide an authenticity result to the PC to indicate whether the article is authentic. On the other hand, if the PC and reader are being used to record or validate an item within the database, then the signature can be provided to the database for storage therein, and no comparison may be needed. In this situation a comparison could be performed however, to avoid a single item being entered into the database twice.

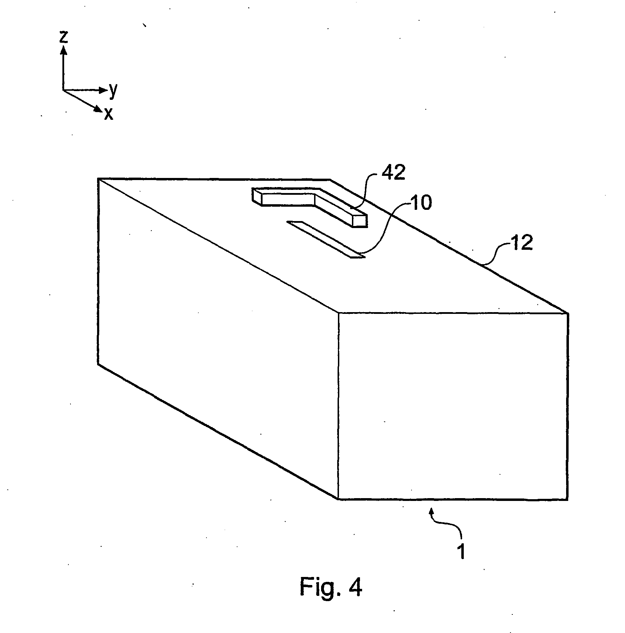

Figure 4 is a perspective view of the reader apparatus 1 showing its external form. The housing 12 and slit-shaped reading aperture 10 are evident. A physical location aid 42 is also apparent and is provided for positioning an article of a given form in a fixed position in relation to the reading aperture 10. In the present example, the physical location aid 42 is in the form of a right-angle bracket in which the corner of a document or packaging box can be located. This ensures that the same part of the article can be positioned in the reading aperture 10 whenever the article needs to be scanned. A simple angle bracket or equivalent, is sufficient for articles with a well-defined corner, such as sheets of paper, passports, ID cards and packaging boxes. Other shaped position guides could be provided to accept items of different shapes, such as circular items including CDs and DVDs, or items with curved surfaces such as cylindrical packaging containers. Where only one size and shape of item is to be scanned a slot may be provided for receiving the item.

Thus there has now been described an example of a scanning and signature generation apparatus suitable for use in a security mechanism for remote verification of article authenticity. Such a system can be deployed to allow an article to be scanned in more than one location, and for a check to be performed to ensure that the article is the same article in both instances, and optionally for a check to performed to ensure that the article has not been tampered with between initial and subsequent scannings.

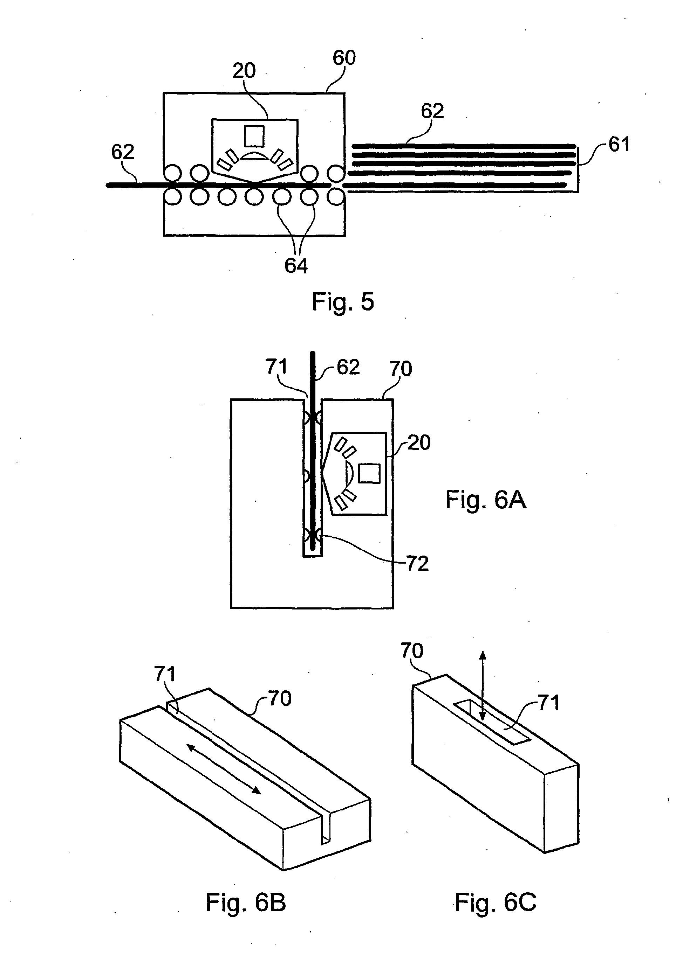

Figure 5 shows an example of an alternative physical configuration for a reader where a document feeder is provided to ensure that article placement is consistent. In this example, a housing 60 is provided, having an article feed tray 61 attached thereto. The tray 61 can hold one or more articles 62 for scanning by the reader. A motor can drive feed rollers 64 to carry an article 62 through the device and across a scanning aperture of an optics subassembly 20 as described above. Thus the article 62 can be scanned by the optics subassembly 20 in the manner discussed above in a manner whereby the relative motion between optics subassembly and article is created by movement of the article. Using such a system, the motion of the scanned item can be controlled using the motor with sufficient linearity that the use of distance marks and linearisation processing may be unnecessary. The apparatus could follow any conventional format for document scanners, photocopiers or document management systems. Such a scanner may be configured to handle line-feed sheets (where multiple sheets are connected together by, for example, a perforated join) as well as or instead of handing single sheets.

Thus there has now been described an apparatus suitable for scanning articles in an automated feeder type device. Depending upon the physical arrangement of the feed arrangement, the scanner may be able to scan one or more single sheets of material, joined sheets or material or three-dimensional items such as packaging cartons.

Figures 6 show examples of further alternative physical configurations for a reader. In this example, the article is moved through the reader by a user. As shown in Figure 6A, a reader housing 70 can be provided with a slot 71 therein for insertion of an article for scanning. An optics subassembly 20 can be provided with a scanning aperture directed into the slot 71 so as to be able to scan an article 62 passed through the slot. Additionally, guide elements 72 may be provided in the slot 71 to assist in guiding the article to the correct focal distance from the optics sub-assembly 20 and/or to provide for a constant speed passage of the article through the slot.

As shown in Figure 6B, the reader may be configured to scan the article when moved along a longitudinal slot through the housing 70, as indicated by the arrow. Alternatively, as shown in Figure 6C, the reader may be configured to scan the article when inserted into or removed from a slot extending into the reader housing 70, as indicated by the arrow. Scanners of this type may be particularly suited to scanning articles which are at least partially rigid, such as card, plastic or metal sheets. Such sheets may, for example, be plastic items such as credit cards or other bank cards.

Thus there have now been described an arrangement for manually initiated scanning of an article. This could be used for scanning bank cards and/or credit cards. Thereby a card could be scanned at a terminal where that card is presented for use, and a signature taken from the card could be compared to a stored signature for the card to check the authenticity and un-tampered nature of the card. Such a device could also be used, for example in the context of reading a military-style metal ID-tag (which tags are often also carried by allergy sufferers to alert others to their allergy). This could enable medical personnel treating a patient to ensure that the patient being treated was in fact the correct bearer of the tag. Likewise, in a casualty situation, a recovered tag could be scanned for authenticity to ensure that a casualty has been correctly identified before informing family and/or colleagues.

The above-described examples are based on localised excitation with a coherent light beam of small cross-section in combination with detectors that accept light signal scattered over a much larger area that includes the local area of excitation. It is possible to design a functionally equivalent optical system which is instead based on directional detectors that collect light only from localised areas in combination with excitation of a much larger area.

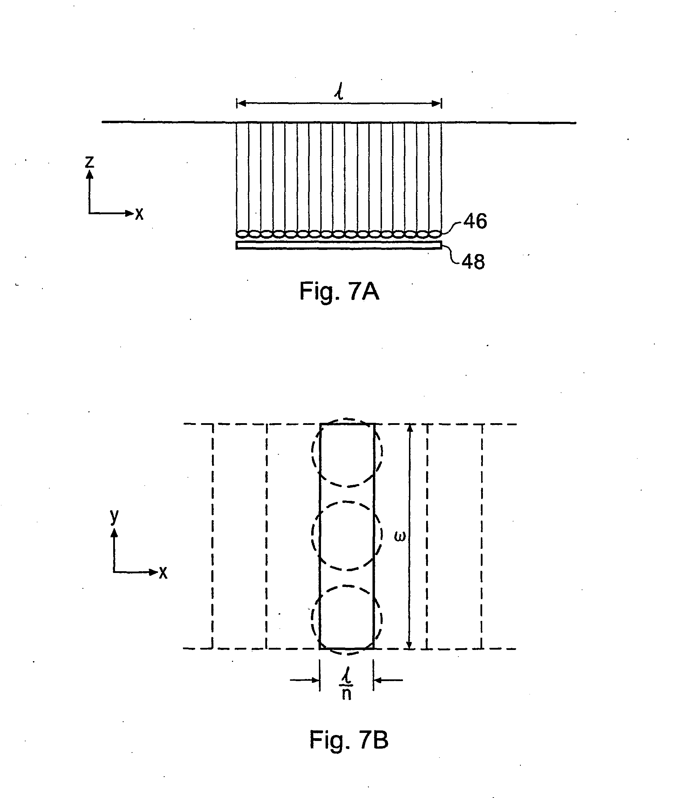

Figure 7A shows schematically in side view such an imaging arrangement for a reader which is based on directional light collection and blanket illumination with a coherent beam. An array detector 48 is arranged in combination with a cylindrical microlens array 46 so that adjacent strips of the detector array 48 only collect light from corresponding adjacent strips in the reading volume. With reference to Figure 2, each cylindrical microlens is arranged to collect light signal from one of the n sampling strips. The coherent illumination can then take place with blanket illumination of the whole reading volume (not shown in the illustration).

A hybrid system with a combination of localised excitation and localised detection may also be useful in some cases.

Figure 7B shows schematically in plan view the optical footprint of such a hybrid imaging arrangement for a reader in which directional detectors are used in combination with localised illumination with an elongate beam. This example may be considered to be a development of the example of Figure 1 in which directional detectors are provided. In this example three banks of directional detectors are provided, each bank being targeted to collect light from different portions along the '1 x w' excitation strip. The collection area from the plane of the reading volume are shown with the dotted circles, so that a first bank of, for example 2, detectors collects light signal from the upper portion of the excitation strip, a second bank of detectors collects light signal from a middle portion of the excitation strip and a third bank of detectors collects light from a lower portion of the excitation strip. Each bank of detectors is shown having a circular collection area of diameter approximately 1/m, where m is the number of subdivisions of the excitation strip, where m = 3 in the present example. In this way the number of independent data points can be increased by a factor of m for a given scan length 1. As described further below, one or more of different banks of directional detectors can be used for a purpose other than collecting light signal that samples a speckle pattern. For example, one of the banks may be used to collect light signal in a way optimised for barcode scanning. If this is the case, it will generally be sufficient for that bank to contain only one detector, since there will be no advantage obtaining cross-correlations when only scanning for contrast.

Having now described the principal structural components and functional components of various reader apparatuses, the numerical processing used to determine a signature will now be described. It will be understood that this numerical processing can be implemented for the most part in a computer program that runs on the PC 34 with some elements subordinated to the PIC 30. In alternative examples, the numerical processing could be performed by a dedicated numerical processing device or devices in hardware or firmware.

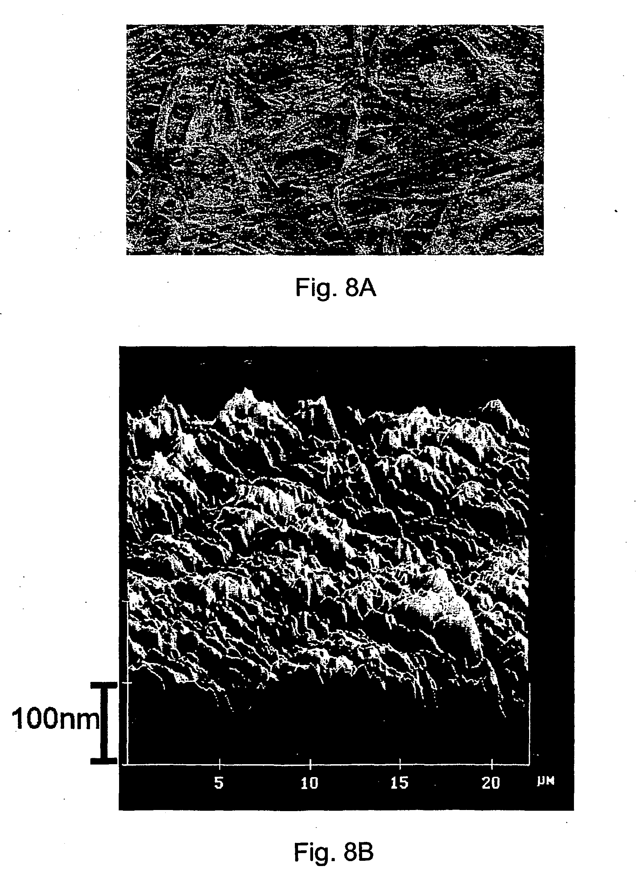

Figure 8A is a microscope image of a paper surface with the image covering an area of approximately 0.5 x 0.2 mm. This figure is included to illustrate that macroscopically flat surfaces, such as from paper, are in many cases highly structured at a microscopic scale. For paper, the surface is microscopically highly structured as a result of the intermeshed network of wood or other fibres that make up the paper. The figure is also illustrative of the characteristic length scale for the wood fibres which is around 10 microns. This dimension has the correct relationship to the optical wavelength of the coherent beam of the present example to cause diffraction and hence speckle, and also diffuse scattering which has a profile that depends upon the fibre orientation. It will thus be appreciated that if a reader is to be designed for a specific class of goods, the wavelength of the laser can be tailored to the structure feature size of the class of goods to be scanned. It is also evident from the figure that the local surface structure of each piece of paper will be unique in that it depends on how the individual wood fibres are arranged. A piece of paper is thus no different from a specially created token, such as the special resin tokens or magnetic material deposits of the prior art, in that it has structure which is unique as a result of it being made by a process governed by laws of nature. The same applies to many other types of article.

Figure 8B shows an equivalent image for a plastic surface. This atomic force microscopy image clearly shows the uneven surface of the macroscopically smooth plastic surface. As can be surmised from the figure, this surface is smoother than the paper surface illustrated in Figure 8A, but even this level of surface undulation can be uniquely identified using the signature generation scheme of the present example.

In other words, it can be essentially pointless to go to the effort and expense of making specially prepared tokens, when unique characteristics are measurable in a straightforward manner from a wide variety of every day articles. The data collection and numerical processing of a scatter signal that takes advantage of the natural structure of an article's surface (or interior in the case of transmission) is now described.

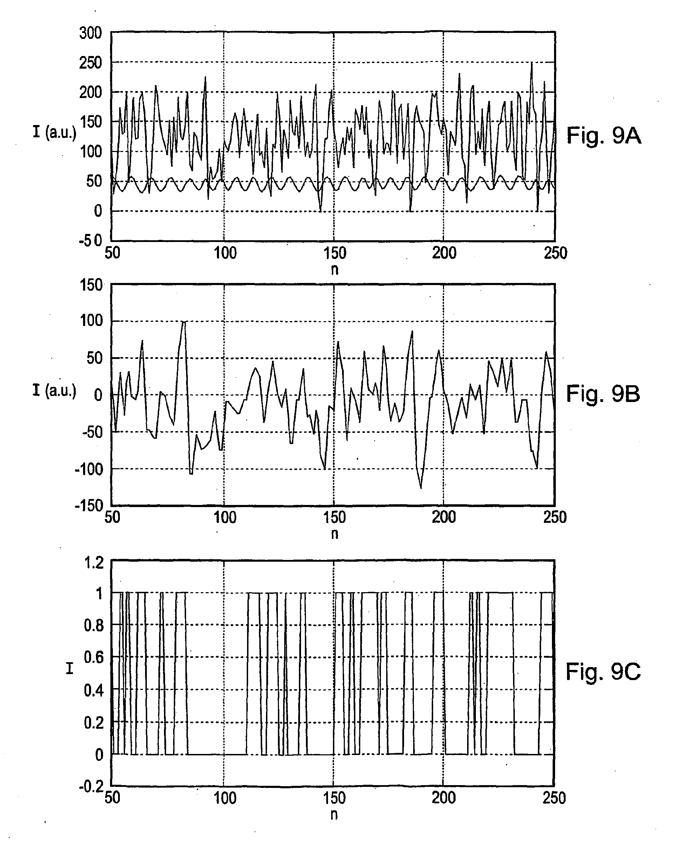

Figure 9A shows raw data from a single one of the photodetectors 16a...d of the reader of Figure 1. The graph plots signal intensity I in arbitrary units (a.u.) against point number n (see Figure 2). The higher trace fluctuating between I = 0 - 250 is the raw signal data from photodetector 16a. The lower trace is the encoder signal picked up from the markers 28 (see Figure 2) which is at around I = 50.

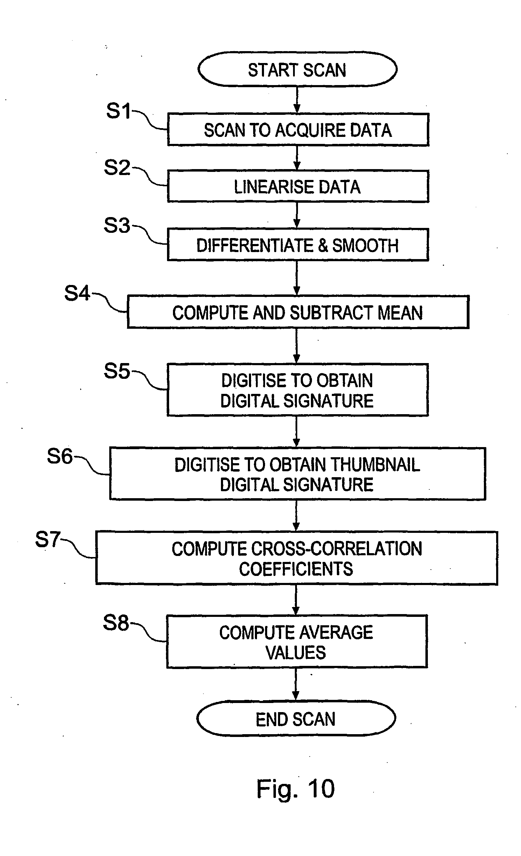

Figure 9B shows the photodetector data of Figure 10A after linearisation with the encoder signal (n.b. although the x axis is on a different scale from Figure 10A, this is of no significance). As noted above, where a movement of the article relative to the scanner is sufficiently linear, there may be no need to make use of a linearisation relative to alignment marks. In addition, the average of the intensity has been computed and subtracted from the intensity values. The processed data values thus fluctuate above and below zero.

Figure 9C shows the data of Figure 9B after digitisation. The digitisation scheme adopted is a simple binary one in which any positive intensity values are set at value 1 and any negative intensity values are set at zero. It will be appreciated that multi-state digitisation could be used instead, or any one of many other possible digitisation approaches. The main important feature of the digitisation is merely that the same digitisation scheme is applied consistently.

Figure 10 is a flow diagram showing how a signature of an article is generated from a scan.

Step S1 is a data acquisition step during which the optical intensity at each of the photodetectors is acquired approximately every 1ms during the entire length of scan. Simultaneously, the encoder signal is acquired as a function of time. It is noted that if the scan motor has a high degree of linearisation accuracy (e.g. as would a stepper motor) then linearisation of the data may not be required. The data is acquired by the PIC 30 taking data from the ADC 31. The data points are transferred in real time from the PIC 30 to the PC 34. Alternatively, the data points could be stored in memory in the PIC 30 and then passed to the PC 34 at the end of a scan. The number n of data points per detector channel collected in each scan is defined as $N$ in the following. Further, the value $\alpha_k(i)$ is defined as the i-th stored intensity value from photodetector $k$, where $i$ runs from 1 to $N$. Examples of two raw data sets obtained from such a scan are illustrated in Figure 9A.

Step S2 uses numerical interpolation to locally expand and contract $\alpha_k(i)$ so that the encoder transitions are evenly spaced in time. This corrects for local variations in the motor speed. This step can be performed in the PC 34 by a computer program.

Step S3 is an optional step. If performed, this step numerically differentiates the data with respect to time. It may also be desirable to apply a weak smoothing function to the data. Differentiation may be useful for highly structured surfaces, as it serves to attenuate uncorrelated contributions from the signal relative to correlated (speckle) contributions.

Step S4 is a step in which, for each photodetector, the mean of the recorded signal is taken over the N data points. For each photodetector, this mean value is subtracted from all of the data points so that the data are distributed about zero intensity. Reference is made to Figure 9B which shows an example of a scan data set after linearisation and subtraction of a computed average.

Step S5 digitises the analogue photodetector data to compute a digital signature representative of the scan. The digital signature is obtained by applying the rule: $a_k(i) > 0$ maps onto binary '1' and $a_k(i) \leq 0$ maps onto binary '0'. The digitised data set is defined as $d_k(i)$

where i runs from 1 to $N$. The signature of the article may incorporate further components in addition to the digitised signature of the intensity data just described. These further optional signature components are now described.

Step S6 is an optional step in which a smaller 'thumbnail' digital signature is created. This is done either by averaging together adjacent groups of $m$ readings, or more preferably by picking every cth data point, where $c$ is the compression factor of the thumbnail. The latter is preferred since averaging may disproportionately amplify noise. The same digitisation rule used in Step S5 is then applied to the reduced data set. The thumbnail digitisation is defined as $t_k(i)$ where i runs 1 to $N/c$ and c is the compression factor.

Step S7 is an optional step applicable when multiple detector channels exist. The additional component is a cross-correlation component calculated between the intensity data obtained from different ones of the photodetectors. With 2 channels there is one possible cross-correlation coefficient, with 3 channels up to 3, and with 4 channels up to 6 etc. The cross-correlation coefficients are useful, since it has been found that they are good indicators of material type. For example, for a particular type of document, such as a passport of a given type, or laser printer paper, the cross-correlation coefficients always appear to lie in predictable ranges. A normalised cross-correlation can be calculated between $a_k(i)$ and $a_l(i)$, where $k \neq l$ and k,l vary across all of the photodetector channel numbers. The normalised cross-correlation function r is defined as

$$\Gamma(k,l) = \frac{\sum_{i=1}^{N} a_k(i) a_l(i)}{\sqrt{\left(\sum_{i=1}^{N} a_k(i)^2\right)\left(\sum_{i=1}^{N} a_l(i)^2\right)}}$$

Another aspect of the cross-correlation function that can be stored for use in later verification is the width of the peak in the cross-correlation function, for example the full width half maximum (FWHM). The use of the cross-correlation coefficients in verification processing is described further below.

Step S8 is another optional step which is to compute a simple intensity average value indicative of the signal intensity distribution. This may be an overall average of each of the mean values for the different detectors or an average for each detector, such as a root mean square (rms) value of $a_k(i)$. If the detectors are arranged in pairs either side of normal incidence as in the reader described above, an average for each pair of detectors may be used. The intensity value has been found to be a good crude filter for material type, since it is a simple indication of overall reflectivity and roughness of the sample. For example, one can use as the intensity value the unnormalised rms value after removal of the average value, i.e. the DC background.

The signature data obtained from scanning an article can be compared against records held in a signature database for verification purposes and/or written to the database to add a new record of the signature to extend the existing database.

A new database record will include the digital signature obtained in Step S5. This can optionally be supplemented by one or more of its smaller thumbnail version obtained in Step S6 for each photodetector channel, the cross-correlation coefficients obtained in Step S7 and the average value(s) obtained in Step S8. Alternatively, the thumbnails may be stored on a separate database of their own optimised for rapid searching, and the rest of the data (including the thumbnails) on a main database.

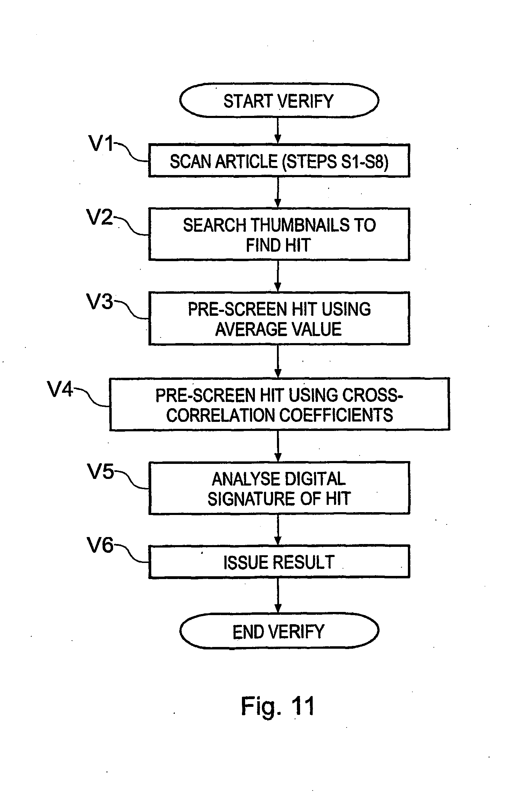

Figure 11 is a flow diagram showing how a signature of an article obtained from a scan can be verified against a signature database.

In a simple implementation, the database could simply be searched to find a match based on the full set of signature data. However, to speed up the verification process, the process can use the smaller thumbnails and pre-screening based on the computed average values and cross-correlation coefficients as now described.

Verification Step V1 is the first step of the verification process, which is to scan an article according to the process described above, i.e. to perform Scan Steps S 1 to S8.

Verification Step V2 takes each of the thumbnail entries and evaluates the number of matching bits between it and $t_k(i+j)$, where $j$ is a bit offset which is varied to compensate for errors in placement of the scanned area. The value of $j$ is determined and then the thumbnail entry which gives the maximum number of matching bits. This is the 'hit' used for further processing.

Verification Step V3 is an optional pre-screening test that is performed before analysing the full digital signature stored for the record against the scanned digital signature. In this pre-screen, the rms values obtained in Scan Step S8 are compared against the corresponding stored values in the database record of the hit. The 'hit' is rejected from further processing if the respective average values do not agree within a predefined range. The article is then rejected as non-verified (i.e. jump to Verification Step V6 and issue fail result).

Verification Step V4 is a further optional pre-screening test that is performed before analysing the full digital signature. In this pre-screen, the cross-correlation coefficients obtained in Scan Step S7 are compared against the corresponding stored values in the database record of the hit. The 'hit' is rejected from further processing if the respective cross-correlation coefficients do not agree within a predefined range. The article is then rejected as non-verified (i.e. jump to Verification Step V6 and issue fail result).

Another check using the cross-correlation coefficients that could be performed in Verification Step V4 is to check the width of the peak in the cross-correlation function, where the cross-corrleation function is evaluated by comparing the value stored from the original scan in Scan Step S7 above and the re-scanned value:

$$\Gamma_{k,l}(j) = \frac{\sum_{i=1}^{N} a_k(i) a_l(i+j)}{\sqrt{\left( \sum_{i=1}^{N} a_k(i)^2 \right) \left( \sum_{i=1}^{N} a_l(i)^2 \right)}}$$

If the width of the re-scanned peak is significantly higher than the width of the original scan, this may be taken as an indicator that the re-scanned article has been tampered with or is otherwise suspicious. For example, this check should beat a fraudster who attempts to fool the system by printing a bar code or other pattern with the same intensity variations that are expected by the photodetectors from the surface being scanned.

Verification Step V5 is the main comparison between the scanned digital signature obtained in Scan Step S5 and the corresponding stored values in the database record of the hit. The full stored digitised signature, $d_k^{db}(i)$ is split into $n$ blocks of $q$ adjacent bits on $k$ detector channels, i.e. there are $qk$ bits per block. A typical value for $q$ is 4 and a typical value for $k$ is 4, making typically 16 bits per block. The $qk$ bits are then matched against the $qk$ corresponding bits in the stored digital signature $d_k^{db}(i+j)$. If the number of matching bits within the block is greater or equal to some pre-defined threshold $Z_{thresh}$, then the number of matching blocks is incremented. A typical value for $Z_{thresh}$ is 13. This is repeated for all $n$ blocks. This whole process is repeated for different offset values of $j$, to compensate for errors in placement of the scanned area, until a maximum number of matching blocks is found. Defining $M$ as the maximum number of matching blocks, the probability of an accidental match is calculated by evaluating:

$$p(M) = \sum_{w=n-M}^{n} s^w (1-s)^{n-w} \, {}_w^n C$$

where $s$ is the probability of an accidental match between any two blocks (which in turn depends upon the chosen value of $Z_{threshold}$), M is the number of matching blocks and p(M) is the probability of M or more blocks matching accidentally. The value of $s$ is determined by comparing blocks within the data base from scans of different objects of similar materials, e.g. a number of scans of paper documents etc. For the case of $q$=4, $k$=4 and $z_{threshold}$=13, we typical value of $s$ is 0.1. If the $qk$ bits were entirely independent, then probability theory would give $s$=0.01 for $z_{threshold}$=13. The fact that a higher value is found empirically is because of correlations between the $k$ detector channels and also correlations between adjacent bits in the block due to a finite laser spot width. A typical scan of a piece of paper yields around 314 matching blocks out of a total number of 510 blocks, when compared against the data base entry for that piece of paper. Setting $M$=314, $n$=510, $s$=0.1 for the above equation gives a probability of an accidental match of 10$^{-177}$.

Verification Step V6 issues a result of the verification process. The probability result obtained in Verification Step V5 may be used in a pass/fail test in which the benchmark is a pre-defined probability threshold. In this case the probability threshold may be set at a level by the system, or may be a variable parameter set at a level chosen by the user. Alternatively, the probability result may be output to the user as a confidence level, either in raw form as the probability itself, or in a modified form using relative terms (e.g. no match / poor match / good match /excellent match) or other classification.

It will be appreciated that many variations are possible. For example, instead of treating the cross-correlation coefficients as a pre-screen component, they could be treated together with the digitised intensity data as part of the main signature. For example the cross-correlation coefficients could be digitised and added to the digitised intensity data. The cross-correlation coefficients could also be digitised on their own and used to generate bit strings or the like which could then be searched in the same way as described above for the thumbnails of the digitised intensity data in order to find the hits.

Thus there have now been described a number of examples arrangements for scanning an article to obtain a signature based upon intrinsic properties of that article. There have also been described examples of how that signature can be generated from the data collected during the scan, and how the signature can be compared to a later scan from the same or a different article to provide a measure of how likely it is that the same article has been scanned in the later scan.

Such a system has many applications, amongst which are security and confidence screening of items for fraud prevention and item traceability.

In some examples, the method for extracting a signature from a scanned article can be optimised to provide reliable recognition of an article despite deformations to that article caused by, for example, stretching or shrinkage. Such stretching or shrinkage of an article may be caused by, for example, water damage to a paper or cardboard based article.

Also, an article may appear to a scanner to be stretched or shrunk if the relative speed of the article to the sensors in the scanner is non-linear. This may occur if, for example the article is being moved along a conveyor system, or if the article is being moved through a scanner by a human holding the article. An example of a likely scenario for this to occur is where a human scans, for example, a bank card using a scanner such as that described with reference to Figures 6A, 6B and 6C above.

As described above, where a scanner is based upon a scan head which moves within the scanner unit relative to an article held stationary against or in the scanner, then linearisation guidance can be provided by the optional distance marks 28 to address any non-linearities in the motion of the scan head. Where the article is moved by a human, these non-linearities can be greatly exaggerated

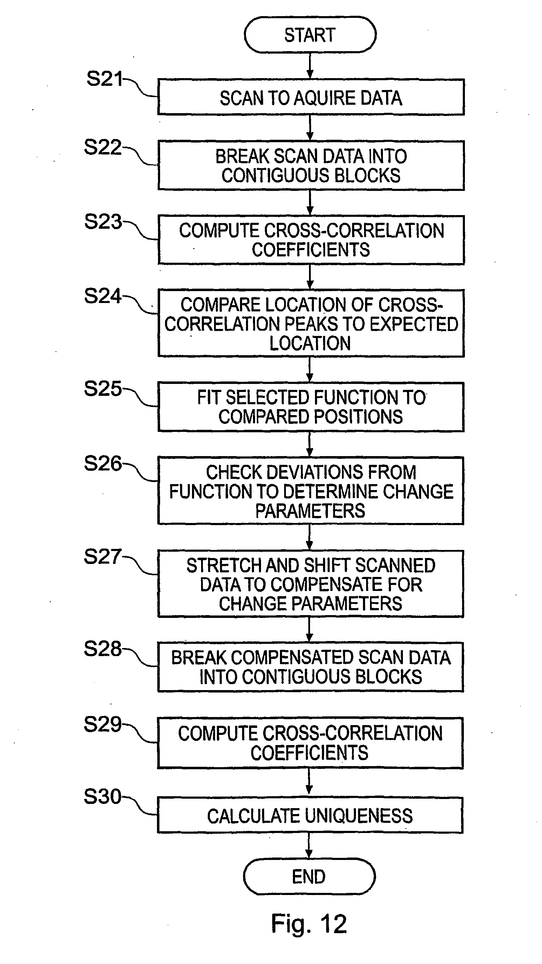

To address recognition problems which could be caused by these non-linear effects, it is possible to adjust the analysis phase of a scan of an article. Thus a modified validation procedure will now be described with reference to Figure 12. The process implemented in this example uses a block-wise analysis of the data to address the non-linearities.

The process carried out in accordance with Figure 12, can include some or all of the steps of smoothing and differentiating the data, computing and subtracting the mean, and digitisation for obtaining the signature and thumbnail described with reference to Figure 10, but are not shown in Figure 12 so as not to obscure the content of that figure.

As shown in Figure 12, the scanning process for a validation scan using a block-wise analysis starts at step S21 by performing a scan of the article to acquire the date describing the intrinsic properties of the article. This scanned data is then divided into contiguous blocks (which can be performed before or after digitisation and any smoothing/differentiation or the like) at step S22. In one example, a scan length of 54mm is divided into eight equal length blocks. Each block therefore represents a subsection of scanned area of the scanned article.

For each of the blocks, a cross-correlation is performed against the equivalent block for each stored signature with which it is intended that article be compared at step S23. This can be performed using a thumbnail approach with one thumbnail for each block. The results of these cross-correlation calculations are then analysed to identify the location of the cross-correlation peak. The location of the cross-correlation peak is then compared at step S24 to the expected location of the peak for the case were a perfectly linear relationship to exist between the original and later scans of the article.

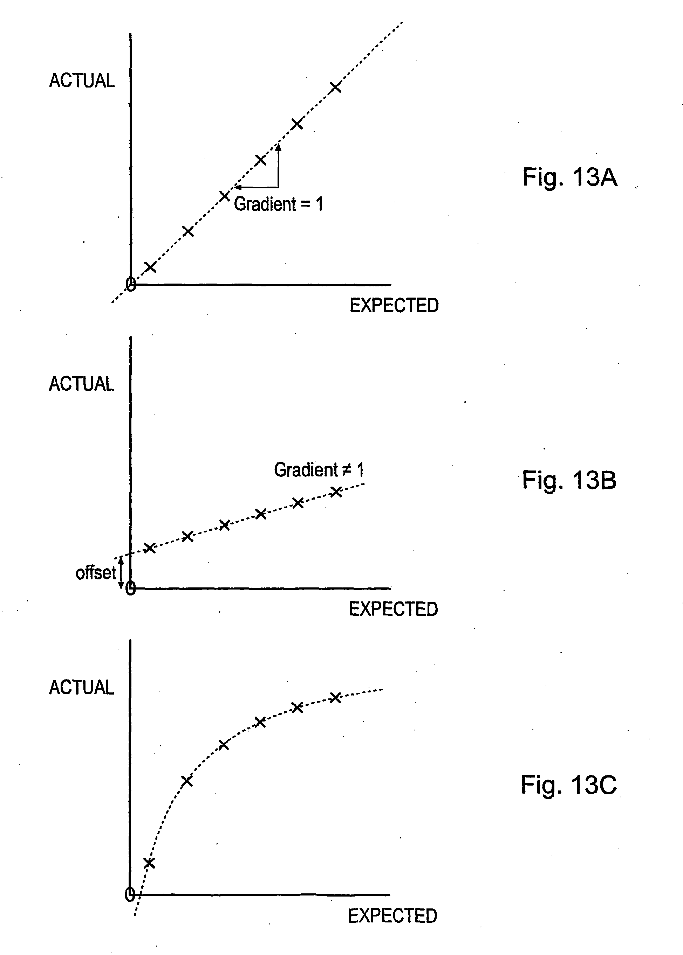

This relationship can be represented graphically as shown in Figures 13A, 13B and 13C. In the example of Figure 13A, the cross-correlation peaks are exactly where expected, such that the motion of the scan head relative to the article has been perfectly linear and the article has not experienced stretch or shrinkage. Thus a plot of actual peak positions against expected peak results in a straight line which passes through the origin and has a gradient of 1.

In the example of Figure 13B, the cross-correlation peaks are closer together than expected, such that the gradient of a line of best fit is less than one. Thus the article has shrunk relative to its physical characteristics upon initial scanning. Also, the best fit line does not pass through the origin of the plot. Thus the article is shifted relative to the scan head compared to its position upon initial scanning.

In the example of Figure 13C, the cross correlation peaks do not form a straight line. In this example, they approximately fit to a curve representing a $y^2$ function. Thus the movement of the article relative to the scan head has slowed during the scan. Also, as the best fit curve does not cross the origin, it is clear that the article is shifted relative to its position upon initial scanning.

A variety of functions can be test-fitted to the plot of points of the cross-correlation peaks to find a best-fitting function. Thus curves to account for stretch, shrinkage, misalignment, acceleration, deceleration, and combinations thereof can be used.

Once a best-fitting function has been identified at step S25, a set of change parameters can be determined which represent how much each cross-correlation peak is shifted from its expected position at step S26. These compensation parameters can then, at step S27, be applied to the data from the scan taken at step S21 in order substantially to reverse the effects of the shrinkage, stretch, misalignment, acceleration or deceleration on the data from the scan. As will be appreciated, the better the best-fit function obtained at step S25 fits the scan data, the better the compensation effect will be.

The compensated scan data is then broken into contiguous blocks at step S28 as in step S22. The blocks are then individually cross-correlated with the respective blocks of data from the stored signature at step S29 to obtain the cross-correlation coefficients. This time the magnitude of the cross-correlation peaks are analysed to determine the uniqueness factor at step S29. Thus it can be determined whether the scanned article is the same as the article which was scanned when the stored signature was created.

Accordingly, there has now been described an example of a method for compensating for physical deformations in a scanned article, and for non-linearities in the motion of the article relative to the scanner. Using this method, a scanned article can be checked against a stored signature for that article obtained from an earlier scan of the article to determine with a high level of certainty whether or not the same article is present at the later scan. Thereby an article constructed from easily distorted material can be reliably recognised. Also, a scanner where the motion of the scanner relative to the article may be non-linear can be used, thereby allowing the use of a low-cost scanner without motion control elements.

In some scanner apparatuses, it is also possible that it may be difficult to determine where a scanned region starts and finishes. Of the examples discussed above, this is most problematic for the example of Figure 6B, where an article to be scanned passes through a slot, such that the scan head may "see" more of an article than the intended scan area. One approach to addressing this difficulty would be to define the scan area as starting at the edge of the article. As the data received at the scan head will undergo a clear step change when an article is passed though what was previously free space, the data retrieved at the scan head can be used to determine where the scan starts.

In this example, the scan head is operational prior to the application of the article to the scanner. Thus initially the scan head receives data corresponding to the unoccupied space in front of the scan head. As the article is passed in front of the scan head, the data received by the scan head immediately changes to be data describing the article. Thus the data can be monitored to determine where the article starts and all data prior to that can be discarded. The position and length of the scan area relative to the article leading edge- can be determined in a number of ways. The simplest is to make the scan area the entire length of the article, such that the end can be detected by the scan head again picking up data corresponding to free space. Another method is to start and/or stop the recorded data a predetermined number of scan readings from the leading edge. Assuming that the article always moves past the scan head at approximately the same speed, this would result in a consistent scan area. Another alternative is to use actual marks on the article to start and stop the scan region, although this may require more work, in terms of data processing, to determine which captured data corresponds to the scan area and which data can be discarded.

Thus there has now been described an number of techniques for scanning an item to gather data based on an intrinsic property of the article, compensating if necessary for damage to the article or non-linearities in the scanning process, and comparing the article to a stored signature based upon a previous scan of an article to determine whether the same article is present for both scans.

Another characteristic of an article which can be detected using a block-wise analysis of a signature generated based upon an intrinsic property of that article is that of localised damage to the article. For example, such a technique can be used to detect modifications to an article made after an initial record scan.

For example, many documents, such as passports, ID cards and driving licenses, include photographs of the bearer. If an authenticity scan of such an article includes a portion of the photograph, then any alteration made to that photograph will be detected. Taking an arbitrary example of splitting a signature into 10 blocks, three of those blocks may cover a photograph on a document and the other seven cover another part of the document, such as a background material. If the photograph is replaced, then a subsequent rescan of the document can be expected to provide a good match for the seven blocks where no modification has occurred, but the replaced photograph will provide a very poor match. By knowing that those three blocks correspond to the photograph, the fact that all three provide a very poor match can be used to automatically fail the validation of the document, regardless of the average score over the whole signature.

Also, many documents include written indications of one or more persons, for example the name of a person identified by a passport, driving licence or identity card, or the name of a bank account holder. Many documents also include a place where written signature of a bearer or certifier is applied. Using a block-wise analysis of a signature obtained therefrom for validation can detect a modification to alter a name or other important word or number printed or written onto a document. A block which corresponds to the position of an altered printing or writing can be expected to produce a much lower quality match than blocks where no modification has taken place. Thus a modified name or written signature can be detected and the document failed in a validation test even if the overall match of the document is sufficiently high to obtain a pass result.

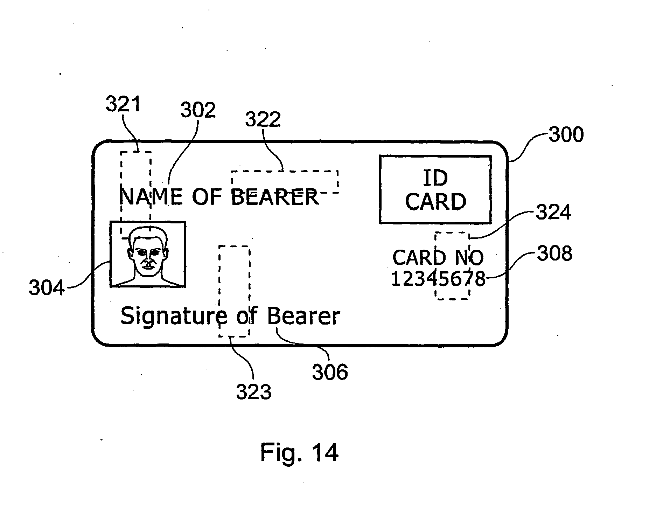

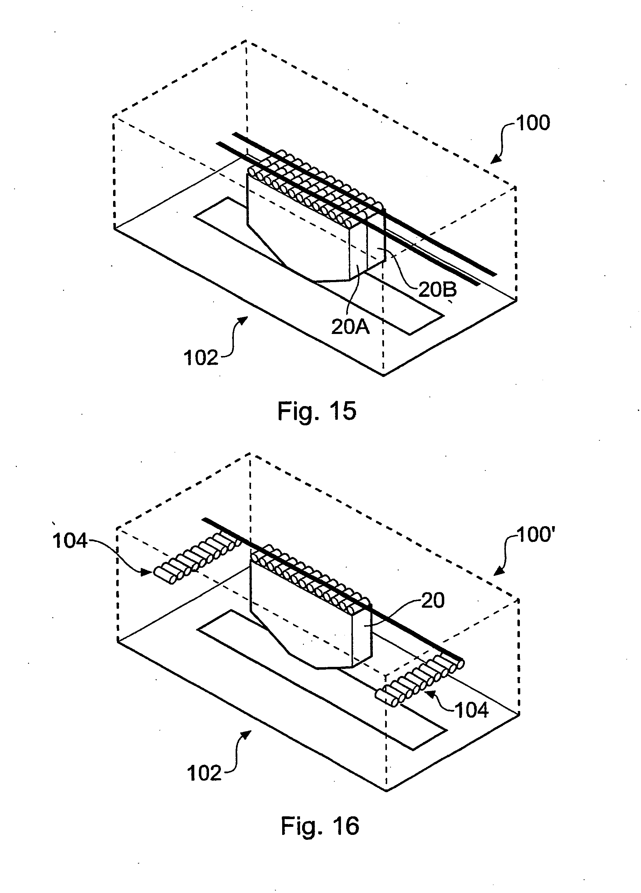

An example of an identity card 300 is shown in Figure 14. The identity card 300 includes a printed bearer name 302, a photograph of the bearer 304, a signature of the bearer 306 (which may be written onto the card, or printed from a scan of a written signature or a signature captured electronically), and a printed card number 308. In order to protect against fraudulent alteration to the identity card, a scan area for generating a signature based upon an intrinsic property of the card can include one or more of those elements. Various example scan areas are marked in Figure 15 to illustrate the possibilities. Example scan area 321 includes part of the printed name 302 and part of the photograph 304. Example scan area 322 includes part of the printed name. Example scan area 323 includes part of the signature 306. Example scan area 324 includes part of the card number 308.

The area and elements selected for the scan area can depend upon a number of factors, including the element of the document which it is most likely that a fraudster would attempt to alter. For example, for any document including a photograph the most likely alteration target will usually be the photograph as this visually identifies the bearer. Thus a scan area for such a document might beneficially be selected to include a portion of the photograph. Another element which may be subjected to fraudulent modification is the bearer's signature, as it is easy for a person to pretend to have a name other than their own, but harder to copy another person 's signature. Therefore for signed documents, particularly those not including a photograph, a scan area may beneficially include a portion of a signature on the document.

In the general case therefore, it can be seen that a test for authenticity of an article can comprise a test for a sufficiently high quality match between a verification signature and a record signature for the whole of the signature, and a sufficiently high match over at least selected blocks of the signatures. Thus regions important to the assessing the authenticity of an article can be selected as being critical to achieving a positive authenticity result.

In some examples, blocks other than those selected as critical blocks may be allowed to present a poor match result. Thus a document may be accepted as authentic despite being torn or otherwise damaged in parts, so long as the critical blocks provide a good match and the signature as a whole provides a good match.

Thus there have now been described a number of examples of a system, method and apparatus for identifying localised damage to an article, and for rejecting an inauthentic an article with localised damage or alteration in predetermined regions thereof. Damage or alteration in other regions may be ignored, thereby allowing the document to be recognised as authentic.

When using a biometric technique such as the identity technique described with reference to Figures 1 to 14 above for the verification of the authenticity or identity of an article, difficulties can arise with the reproducibility of signatures based upon biometric characteristics. In particular, as well as the inherent tendency for a biometric signature generation system to return slightly different results in each signature generated from an article, where an article is subjected to a signature generation process at different signature generation apparatuses and at different times there is the possibility that a slightly different portion of the article is presented on each occasion, making reliable verification more difficult.

Examples of systems, .methods and apparatuses for addressing these difficulties will now be described. First, with reference to Figure 15, a multi-scan head signature generation apparatus for database creation will be described.

As shown in Figure 15, a reader unit 400 can include two optic subassemblies 20, each operable to create a signature for an article presented in a reading volume 402 of the reader unit. Thus an item presented for scanning to create a signature for recording of the item in an item database against which the item can later be verified, can be scanned twice, to create two signatures, spatially offset from one another by a likely alignment error amount. Thus a later scan of the item for identification or authenticity verification can be matched against both stored signatures. In some examples, a match against one of the two stored signatures can be considered as a successful match.

In some examples, further read heads can be used, such that three, four or more signatures are created for each item. Each scan head can be offset from the others in order to provide signatures from positions adjacent the intended scan location. Thus greater robustness to article misalignment on verification scanning can be provided.

The offset between scan heads can be selected dependent upon factors such as a width of scanned portion of the article, size of scanned are relative to the total article size, likely misalignment amount during verification scanning, and article material.

Thus there has now been described a system for scanning an article to create a signature database against which an article can be checked to verify the identity and/or authenticity of the article.

An example of another system for providing multiple signatures in an article database will now be describe with reference to Figure 16.

As shown in Figure 16, a reader unit 400' can have a single optic subassembly 20 and an alignment adjustment unit 404. In use, the alignment adjustment unit 404 can alter the alignment of the optics subassembly 20 relative to the reading volume 402 of the reader unit. Thus an article placed in the reading volume can be scanned multiple times by the optics subassembly 20 in different positions so as to create multiple signatures for the article. In the present example, the alignment adjustment unit 404 can adjust the optics subassembly to read from two different locations. Thus a later scan of the item for identification or authenticity verification can be matched against both stored signatures. In some examples, a match against one of the two stored signatures can be considered as a successful match.

In some examples, further read head positions can be used, such that three, four or more signatures are created for each item. Each scan head position can be offset from the others in order to provide signatures from positions adjacent the intended scan location. Thus greater robustness to article misalignment on verification scanning can be provided.

The offset between scan head positions can be selected dependent upon factors such as a width of scanned portion of the article, size of scanned are relative to the total article size, likely misalignment amount during verification scanning, and article material.

Thus there has now been described another example of a system for scanning an article to create a signature database against which an article can be checked to verify the identity and/or authenticity of the article.

Although it has been described above that a scanner used for record scanning (i.e. scanning of articles to create reference signatures against which the article can later be validated) can use multiple scan heads and/or scan head positions to create multiple signatures for an article, it is also possible to use a similar system for later validation scanning.

For example, a scanner for use in a validation scan may have multiple read heads to enable multiple validation scan signatures to be generated. Each of these multiple signatures can be compared to a database of recorded signatures, which may itself contain multiple signatures for each recorded item. Due to the fact that, although the different signatures for each item may vary these signatures will all still be extremely different to any signatures for any other items, a match between any one record scan signature and any one validation scan signature should provide sufficient confidence in the identity and/or authenticity of an item. A multiple read head validation scanner can be arranged much as described with reference to Figure 15 above. Likewise, a multiple read head position validation scanner can be arranged much as described with reference to Figure 16 above. Also, for both the record and validation scanners, a system of combined multiple scan heads and multiple scan head positions per scan head can be combined into a single device.

Where data describing a person or other legal entity is stored by a third party, there can be concerns as to the accessibility of that data by unauthorised or illintentioned persons. For example, banks and other financial service providers may store a great deal of information regarding debt, credit history, income and personal data about a large number of their customers. Law enforcement agencies may store details of convicted individuals, witnesses, informants, and undercover operatives. Medical agencies may store details of patients such as medical history, lifestyle information and treatment preferences. Employers may store details of employees such as salary, disciplinary record and personal circumstances.

Thus a large number of organisations may store a great deal of information about an individual, which information that individual may wish to keep private. Also, some of the information so stored may be covered by laws concerning the maintenance of records about individuals. Thus the inappropriate, inadvertent or malicious release of such information may both create antipathy towards the organisation storing the data from users of that organisation, and constitute civil or criminal wrongs actionable by legal actions with penalties including payment of damages, payment of fines and/or imprisonment.

In the following discussion, a system and method for preventing unauthorised access to such information is presented.

In many cases where an organisation stores data describing an individual there is often no need for any member of that organisation to access the data when the individual is not present. In other situations, the individual may not be physically present but may be conducting a telephone or online transaction or discussion with the organisation. In other situations, there may be a limited number of persons at the organisation who need full access to the data, with others merely needing to see only some of the data or simply that the data exists without seeing the data content.

All of these situations can be handled by the system of the present examples where access to the data is controlled by an access token in the possession of the individual.

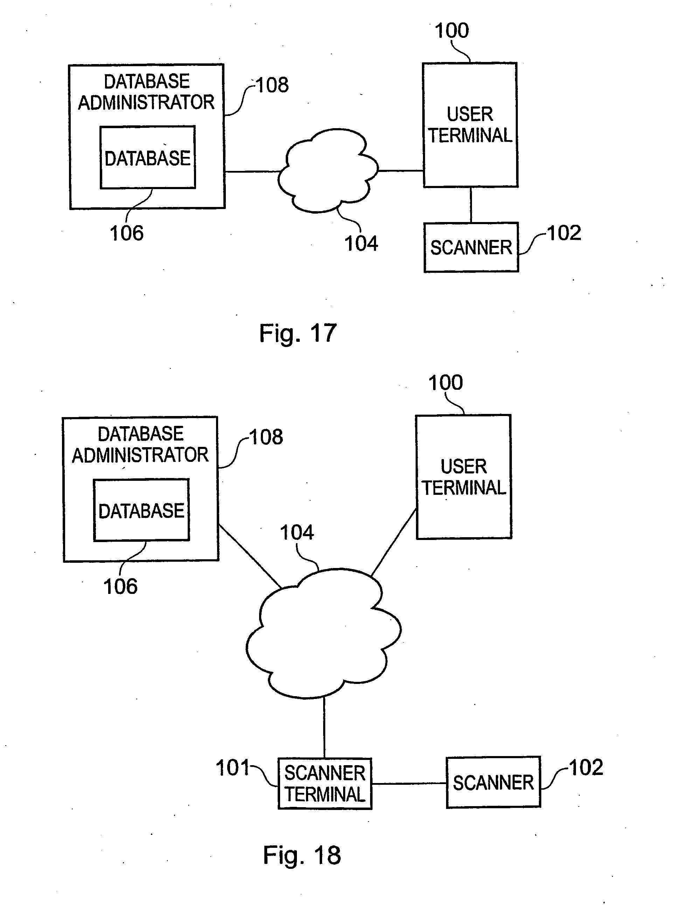

An example of a first system for using an access token for access to information will now be described with reference to Figure 17. In this system, a user at a user terminal 100 can desire or require access to information linked to a particular individual. The user terminal can be any form of conventional computing apparatus, such as a personal computer, workstation or handheld computer. The individual to whom the information is linked can be the user, or can be an individual with whom the user has a personal or professional relationship. An example of this latter situation would be where a bank employee (the user) needs to access financial information of a customer (the individual) in order to determine whether some product or service can be made available to that customer. Another example is where a medical professional (the user) needs to access medical records for a patient (the individual).

In order to access the information, an access token possessed by the individual can be scanned using a scanner 102. The scanner (perhaps in combination with the attached user terminal) creates a signature for the access token based upon an intrinsic property thereof. The scanner may be an integral part of the user terminal. The signature can be generated based upon an optical scanning technique such as that described with reference to any of Figures 1 to 16 above. Alternatively, other suitable scanning techniques can be used, such as that set out in PCT/GB03/03917 or PCT/GB03/03938, the full contents of which are hereby incorporated hereinto by reference.

Once the signature is generated, it is used to retrieve data from a database 106 where the desired information is stored. The database may be controlled by a database administrator entity 108 which may be tasked with running queries on the database and controlling access thereto (this entity may be distinct from a human user designated as a systems administrator for the database). In the present example, the database administrator entity is accessed via a network 104, which may be a private network, an organisation intranet or the internet. The network may include cabled and/or wireless interconnects.

The signature is sent to the database administrator entity 108 to be used as the search query. Thus the database administrator entity 108 causes a comparison to be performed between the supplied signature and signatures associated with respective ones of the data records in the database. This comparison process can use a search speed enhancing system such as the thumbnail system described above. If a match is found between the signature form the access token and a signature in the database, the data record or records associated with that signature are made available at the user terminal 100. If no match is found in the database between the supplied signature and any of the stored signatures, then no data is made available. In examples where communication between the database administrator entity 108 and user terminal 100 is carried out over a public network, either or both of the signature and the data records can be encrypted for transmission, for example using a public key encryption system. In examples where the data link between the database administrator entity and user terminal uses an html type interface, a secure socket layer connection may be established to provide the encryption.

In the present example, the only way to access the database for reading is by using a signature generated from an access token. Thus, the data cannot be accessed without the access token being present at a desired point of access. Thus, taking the banking example above, the bank employee can access the customer data at a time when it is required (such as when the customer enters a bank to request information or some product or service). However, the bank employee cannot access the customer information at any other time. Thus the customer is protected from bank employees looking up his or her details and causing them to be disclosed without the permission of the customer. In the medical example above, the patient's details can be accessed by a medical professional treating the patient, but cannot be accessed by any other person with access to the medical information database, thus overcoming potential data privacy concerns of the patient as regards the centralised computer storage of medical data.

In one example, the system can allow data to be written to the database without the access token being present. Thus, a user can add data records to the database for individuals whose access token signature is already recorded in the database. Where no access token signature is recorded in the database, the individual does not already have any associated records and thus a new record is required. Thus in this circumstance, a new individual should be added to the database as outlined below. Otherwise, if a signature is already present in the database, then further data may be added without the access token being present. For example, a bank employee may be able to add to a customer record the fact that a financial transfer was defaulted on, or that information in support of a loan application has been provided to the bank. The information content can also be added. For a medical records system, the result of a test which is performed remotely from the patient could be entered where the result becomes available. A suitable example might be where a fluid or tissue sample has been taken from the patient for later laboratory analysis.

On the other hand, in some systems, it might be desirous that data can only be entered when the access token is present. For example, in a record of criminal data, it might be the case that it should only be possible to enter criminal details such as those of an arrest, charge, caution, conviction or acquittal when the individual described in the records is present. Thus, in such a system the access token should be present to add data to the database.

In some examples, it may be necessary or appropriate for a "back-door" to be present such that persons having sufficient authority can access the database without the access token of the individual described by the records. This could be achieved by providing an additional access token for the records to which additional access is required. This additional access token could be associated with one or more records such that all of the records to which access is required could be provided by a single access token. If the access were required for, for example, a criminal investigation, the additional access token could be time-limited such that after the end of a predetermined period the data could no longer be accessed. The "back-door" access could also be provided using some other form of user authentication, thereby bypassing the access token system altogether.

It might also be desirable to provide some form of systems administrator access to the database to allow signatures from new access tokens to be included into the database to replace lost, damaged or stolen access tokens.

The access token used for providing the secure access to the database can be any item from which it is possible to create the necessary signature. This could include a dedicated information access token, such as a medi-tag type item such as those often worn by diabetics and those with strong allergies to allow medical personnel to apply appropriate medical treatment even if the person is not able to describe their medical condition. Such a tag-type might therefore be particularly appropriate to medical information access. Other tag-types could also be used, and different ones of tag-types may be more or less appropriate to various different possible applications.. For example an item which is normally carried such as bank or credit card could be used as an access token, regardless of whether the information related to banking information. Alternatively, a completely non-obvious access token could be used. Examples could include a business card or other similar item. Use of such a non-obvious access token would reduce the chances of a person stealing or finding the access token from using it to gain access to the owner's data. Thereby the "steal me" problem commonly associated with obviously important items and documents (such as bank cards and packages marked "private and confidential") can be avoided.

Thus there has now been described a system, apparatus and method for providing secure access to sensitive information stored in a database. This secure access provides reliable access to the information whilst reducing concerns over data access and privacy.

Another example of a system for using an access token to access information is shown in Figure 18. In this example, the access token scanner is located remote from a user terminal on which the information is to be viewed or accessed.

In the system of this example, a user at a user terminal 100 can desire or require access to information linked to a particular individual. The user terminal can be any form of conventional computing apparatus, such as a personal computer, workstation or handheld computer. The individual to whom the information is linked is, in the present example, not present at the user terminal 100. An example of the circumstances in which this could occur would be when a bank customer wishes to obtain a loan or other bank service without physical attendance at a bank branch. Such a transaction could involve a telephone conversation between the customer and bank staff. Thus in that example the user terminal 100 would be present at a premises of the bank and the user would be a member of staff of the bank.

In order to access the information, an access token possessed by the individual (for example the bank customer) can be scanned using a scanner 102 associated with a scanner terminal 101 which is co-located with the individual (for example bank customer). The scanner (perhaps in combination with the attached scanner terminal) creates a signature for the access token based upon an intrinsic property thereof. The scanner may be an integral part of the scanner terminal. The signature can be generated based upon an optical scanning technique such as that described with reference to any of Figures 1 to 16 above. Alternatively, other suitable scanning techniques can be used, such as that set out in PCT/GB03/03917 or PCT/GB03/03938.

Once the signature is generated, it is used to retrieve data from a database 106 where the desired information is stored. The database may be controlled by a database administrator entity 108 which may be tasked with running queries on the database and controlling access thereto (this entity may be distinct from a human user designated as a systems administrator for the database). In the present example, the database administrator entity is accessed via a network 104, which may be a private network, an organisation intranet or the internet. The network may include cabled and/or wireless interconnects.

The networks used to connect the scanner terminal with the user terminal, and the user terminal with the database may be separate networks. For example the scanner terminal and user terminal may communicate via the internet, and the user terminal and database may communicate via a private network.

The signature is sent to the database administrator entity 108 to be used as the search query. Thus the database administrator entity 108 causes a comparison to be performed between the supplied signature and signatures associated with respective ones of the data records in the database. This comparison process can use a search speed enhancing system such as the thumbnail system described above. If a match is found between the signature form the access token and a signature in the database, the data record or records associated with that signature are made available at the user terminal 100. If no match is found in the database between the supplied signature and any of the stored signatures, then no data is made available. In examples where communication between the database administrator entity 108, the user terminal 100 and the scanner terminal 101 is carried out over a public network, either or both of the signature and the data records can be encrypted for transmission, for example using a public key encryption system. In examples where the data links between the database administrator entity, the user terminal and/or the scanner terminal use an html type interface, a secure socket layer connection may be established to provide the encryption.

In the context of the remote banking example, this system allows a bank employee to gain access to private data about a customer, which data is necessary for a service or product to be made available to that customer, without the customer having to physically attend a bank premises. Other examples for the applicability of this arrangement could include allowing a patient to receive the results of a medical test without attending medical premises.

The above-described options and alternatives for writing information to the database, "back-door" systems administrator, regulatory or investigative access, and different types of access tokens apply equally to the example of Figure 15.

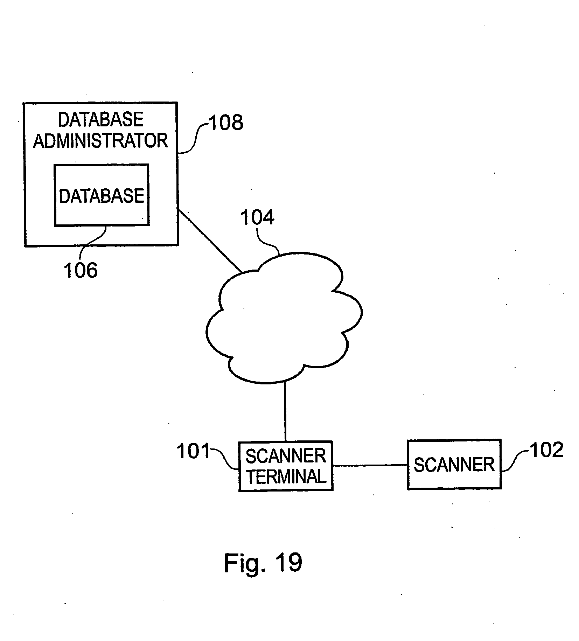

With reference to Figure 19, there will now be described another example of a system for using an access token to access information. In this example, the user uses the access token to access the information in the database without interacting with a representative of the entity which stores or uses the information.

In the system of this example, a user at a scanner terminal 101 can desire or require access to information linked to an access token in the user's possession. Typically this information will relate to the user. The scanner terminal 101 can be any form of conventional computing apparatus, such as a personal computer, workstation or handheld computer. An example of when this might be desired is if the user wishes to check the information stored about them. In the context of a banking facility, the user may wish to check account balances, view a transfer history or view other banking information. In some circumstances, a bank may also allow a customer to transfer money or to make bill payments without direct contact with a member of bank staff. Such transactions would thus result in data being written to as well as read from the database.

In order to access the information, an access token possessed by the user (for example the bank customer) can be scanned using a scanner 102 associated with the scanner terminal 101. The scanner (perhaps in combination with the attached scanner terminal) creates a signature for the access token based upon an intrinsic property thereof. The scanner may be an integral part of the scanner terminal. The signature can be generated based upon an optical scanning technique such as that described with reference to any of Figures 1 to 16 above. Alternatively, other suitable scanning techniques can be used, such as that set out in PCT/GB03/03917 or PCT/GB03/03938.

Once the signature is generated, it is used to retrieve data from a database 106 where the desired information is stored. The database may be controlled by a database administrator entity 108 which may be tasked with running queries on the database and controlling access thereto (this entity may be distinct from a human user designated as a systems administrator for the database). In the present example, the database administrator entity is accessed via a network 104, which may be a private network, an organisation intranet or the internet. The network may include cabled and/or wireless interconnects.

The signature is sent to the database administrator entity 108 to be used as the search query. Thus the database administrator entity 108 causes a comparison to be performed between the supplied signature and signatures associated with respective ones of the data records in the database. This comparison process can use a search speed enhancing system such as the thumbnail system described above. If a match is found between the signature form the access token and a signature in the database, the data record or records associated with that signature are made available at the scanner terminal 101. If no match is found in the database between the supplied signature and any of the stored signatures, then no data is made available. In examples where communication between the database administrator entity 108 and scanner terminal 101 is carried out over a public network, either or both of the signature and the data records can be encrypted for transmission, for example using a public key encryption system. In examples where the data link between the database administrator entity and scanner terminal uses an html type interface, a secure socket layer connection may be established to provide the encryption.

In the context of the remote banking example, this system allows a bank customer to gain access to private data held about them by the bank, access to which data is desired by that customer, without the customer having to physically attend a bank premises or speak to bank staff. Other examples for the applicability of this arrangement could include allowing a patient to receive the results of a medical test without attending medical premises.

The above-described options and alternatives for writing information to the database, "back-door" administrator, regulatory or investigative access, and different types of access tokens apply equally to the example of Figure 15.

In some examples, it may be desirable not to use the signature itself for database access. Instead, the signature of the access token can be used to encrypt another access key. It is possible to use an access key that has some in-built redundancy (or redundancy can be added to a non-redundant key) and error correction code can be added to it. This "padded" key including the error correction code canbe exclusive-ORed with the signature from the access token. This redundancy and eror correction code survives the XORing with the biometric signature. To recreate the access key at the database, a second XORing with the expected biometric signature, can be performed. Any low level errors that were introduced by an imperfectly read biometric signature can be compensated using the error correction code, to leave a perfectly reformed access key.

In summary, the process involves the following steps:

1. Take an access key
2. Add some redundancy and error correction bits
3. XOR with the biometric signature
4. Transmit (over the internet) to the database
5. XOR with the expected biometric signature
6. Do error correction using the redundancy and error correction bits
7. Left with access key, which can be used to locate information in the database.

One advantage of using a system such as this is that it is possible to deliver an error-free access key to the database. Many databases and prefer or require perfect, error-free access keys, although in the other examples above this can be sidestepped by using the signature matching as the access key, such that the signature matching result represents a perfect, error free access key.

Thus there have now been described various examples of systems, apparatus and methods for providing reliable, secure, limited access to information such as information which may be considered to be private or sensitive by a person or organisation described by the data. Thereby such data can be stored by organisations that need access to it, but only accessed by the organisation when the entity described by or in the information gives permission using a non-reproducible access token.

Although the embodiments above have been described in considerable detail, numerous variations and modifications will become apparent to those skilled in the art once the above disclosure is fully appreciated.

**Claims**

1.  A method for accessing a data record, the method comprising:

    creating a signature for an access token by:

    directing coherent radiation sequentially onto each of plurality of regions of a surface of the access token;
    collecting a set comprising groups of data points from signals obtained when the coherent radiation scatters from the different regions of the access token, wherein different ones of the groups of data points relate to scatter from the respective different regions of the written entitlement token, and wherein each group of data points includes data points collected at different angles of scatter relative to the surface of the written entitlement token; and
    determining a signature of the access token from the set of data points;

    comparing the signature to a database of stored signatures, each stored signature having a data record associated therewith; and
providing access to the data record associated with a given stored signature in the event of a match between the said created signature and the stored signature.

2. The method of claim 1, wherein the data record describes sensitive information.

3. The method of claim 1 or 2, wherein the data record includes at least one of data describing financial information, data describing medical information, data describing employee information and data describing legal information.

4. The method of claim 1, 2 or 3, wherein the signature for the access token represents the only access method to the respective data record.

5. The method of any preceding claim, wherein each stored signature is a signature created from a previous scan of an access token.

6. The method of claim 5, wherein determining a match between the created signature and a stored signature indicates that the same access token has been used to create both signatures.

7. The method of any preceding claim, wherein the access token is an arbitrary item.

8. The method of any preceding claim, wherein the access token is an item selected by a user thereof.

9. The method of claim 8, wherein the data record is of or describes information relating to the user of the access token.

10. The method of any preceding claim, wherein the comparing comprises: splitting the signature into blocks of contiguous data and performing a comparison operation between each block and respective blocks of ones of the stored signatures; and comparing an attribute of a comparison result therefrom to an expected attribute of the comparison to determine a compensation value for use in determining the validation result to compensate for damage to the access token and/or non-linearities in the capturing step.

11. The method of any preceding claim, wherein the data record can be written to without a matching access token signature.

12. The method of any preceding claim, wherein the comparing the signature comprises comparing received data to the database of stored signatures to find a match, a match being represented by an access key being returned.

13. The method of claim 12, wherein the signature is used to wrap the access key to create the data for reception by the database.

14. The method of claim 12 or 13, wherein the comparing the received data comprises performing an exclusive OR operation between the signature and the received data.

15. A data access system comprising:

a data record associated with a stored access token signature;
a signature generator, operable to:

direct coherent radiation sequentially onto each of plurality of regions of a surface of the access token;
collect a set comprising groups of data points from signals obtained when the coherent radiation scatters from the different regions of the ,access token, wherein different ones of the groups of data points relate to scatter from the respective different regions of the written entitlement token, and wherein each group of data points includes data points collected at different angles of scatter relative to the surface of the written entitlement token; and
determine a signature of the access token from the set of data points; and

a comparator operable to compare the created signature with the stored signature;
the system being operable to make the data record available in the event of a match between the stored signature and the created signature.

16. The system of claim 15, wherein the date record describes sensitive information.

17. The system of claim 15 or 16, wherein the data record includes at least one of data describing financial information, data describing medical information, data describing employee information and data describing legal information.

18. The system of claim 15, 16 or 17, wherein the signature for the access token represents the only access method to the respective data record.

19. The system of any of claims 15 to 18, wherein each stored signature is a signature created from a previous scan of an access token.

**20.** The system of claim 19, wherein determining a match between the created signature and a stored signature indicates that the same access token has been used to create both signatures.

**21.** The system of any of claims 15 to 20, wherein the access token is an arbitrary item.

**22.** The system of any of claims 15 to 21, wherein the access token is an item selected by a user thereof.

**23.** The system of claim 22, wherein the data record is of or describes information relating to the user of the access token.

**24.** The system of any of claims 15 to 23, wherein the comparator is operable to split the generated signature into blocks of contiguous data and to perform a comparison operation between each block and respective blocks of ones of the stored signatures; and to compare an attribute of a comparison result therefrom to an expected attribute of the comparison to determine a compensation value for use in determining the validation result to compensate for damage to the access token and/or non-linearities in the signature creation.

**25.** The system of any of claims 15 to 24, wherein the data record can be written to without a matching access token signature.

**26.** A data access system comprising:

a plurality of stored data records accessible using respective access keys;
a stored access token signature;
a signature generator, operable to:

direct coherent radiation sequentially onto each of plurality of regions of a surface of the access token;
collect a set comprising groups of data points from signals obtained when the coherent radiation scatters from the different regions of the access token, wherein different ones of the groups of data points relate to scatter from the respective different regions of the written entitlement token, and wherein each group of data points includes data points collected at different angles of scatter relative to the surface of the written entitlement token; and
determine a signature of the access token from the set of data points;

a packaging unit operable to package a data access key using the signature;
an unpacking unit operable to unpack the access key using the stored signature; and
a data access unit operable to retrieve a data record associated with the unwrapped access key.

**27.** A method of accessing data, comprising
a signature from an access token by:

directing coherent radiation sequentially onto each of plurality of regions of a surface of the access token;
collecting a set comprising groups of data points from signals obtained when the coherent radiation scatters from the different regions of the access token, wherein different ones of the groups of data points relate to scatter from the respective different regions of the written entitlement token, and wherein each group of data points includes data points collected at different angles of scatter relative to the surface of the written entitlement token; and
determining a signature of the access token from the set of data points;
creating wrapping a data access key using a signature previously created from the access token;

transmitting the wrapped key to a database of data records, each record being associated with a respective data access key;

unwrapping the data access key using a stored signature previously created from the access token; and
retrieving a data record associated with the unwrapped data access key.

**Patentansprüche**

**1.** Verfahren zum Zugreifen auf einen Datensatz, wobei das Verfahren umfaßt

Erzeugen einer Signatur für ein Zugriffstoken durch:

Steuern von kohärenter Strahlung nacheinander auf jeden aus einer Mehrzahl von Bereichen einer Oberfläche des Zugriffstokens,
Sammeln eines Satzes, welcher Gruppen von Datenpunkten von Signalen beinhaltet, die erhalten werden, wenn die kohärente Strahlung von den verschiedenen Bereichen des Zugriffstokens gestreut wird, wobei verschiedene der Gruppen von Datenpunkten Streuung von den jeweiligen verschiedenen Bereichen des geschriebenen Berechtigungstokens entsprechen und wobei jede Gruppe von Datenpunkten Datenpunkte beinhaltet, die unter verschiedenen Streuwinkeln in Bezug auf die Oberfläche des geschriebenen Berechtlgungstokens gesammelt wurden, und

Bestimmen einer Signatur des Zugrifistokens aus dem Satz von Datenpunkten,

Vergleichen der Signatur mit einer Datenbank von gespeicherten Signaturen, wobei mit jeder gespeicherten Signatur ein Datensatz verknüpft bzw. assoziiert ist, und

Bereitstellen von Zugriff auf den mit einer gegebenen gespeicherten Signatur assoziierten Datensatz, wenn die erzeugte Signatur und die gespeicherte Signatur übereinstimmen.

2. Verfahren nach Anspruch 1, wobei der Datensatz sensible Informationen beschreibt.

3. Verfahren nach Anspruch 1 oder 2, wobei der Datensatz wenigstens entweder Daten, die finanzielle Informationen beschreiben, Daten, die medizinische Informationen beschreiben, Daten, die Angestellteninformationen beschreiben, oder Daten, die gesetzliche Informationen beschreiben, beinhaltet.

4. Verfahren nach Anspruch 1, 2 oder 3, wobei die Signatur für das Zugriffstoken das einzige Zugriffsverfahren auf den jeweiligen Datensatz darstellt.

5. Verfahren nach einem der vorangegangenen Ansprüche, wobei jede gespeicherte Signatur eine Signatur ist, die aus einer vorherigen Überprüfung eines Zugriffstokens erzeugt wurde.

6. Verfahren nach Anspruch 5, wobei das Feststellen einer Übereinstimmung zwischen der erzeugten Signatur und einer gespeicherten Signatur anzeigt, daß das gleiche Zugriffstoken verwendet wurde, um beide Signaturen zu erzeugen.

7. Verfahren nach einem der vorangegangenen Ansprüche, wobei das Zugriffstoken ein bellebiges Element bzw. ein beliebiger Gegenstand ist.

8. Verfahren nach einem der vorangegangenen Ansprüche, wobei das Zugriffstoken ein durch dessen Benutzer gewählter Gegenstand ist.

9. Verfahren nach Anspruch 8, wobei der Datensatz aus Informationen betreffend den Benutzer des Zugriffstokens besteht oder diese beschreibt.

10. Verfahren nach einem der vorangegangenen Ansprüche, wobei das Vergleichen umfaßt Unterteilen der Signatur in Blöcke von zusammenhängenden Daten und Durchführen einer Vergleichsoperation zwischen jedem Block und jeweiligen Blöcken von irgendwelchen der gespeicherten Signaturen und Vergleichen eines Attributs eines Vergleichsergebnisses daraus mit einem erwarteten Attribut des Vergleichs, um einen Kompensationswert zur Verwendung bei der Bestimmung des Validierungsergebnisses zu bestimmen, um Beschädigungen des Zugriffstokens und/oder NIchtlinearitäten beim Schritt des Erfassens zu kompensieren.

11. Verfahren nach einem der vorangegangenen Ansprüche, wobei ohne eine übereinstimmende Zugriffstokensignatur auf den Datensatz geschrieben werden kann.

12. Verfahren nach einem der vorangegangenen Ansprüche, wobei das Vergleichen der Signatur das Vergleichen von empfangenen Daten mit der Datenbank von gespeicherten Signaturen umfaßt, um eine Übereinstimmung zu finden, wobei eine Übereinstimmung durch einen zurückgegebenen Zugriffsschlüssel repräsentiert wird.

13. Verfahren nach Anspruch 12, wobei die Signatur verwendet wird, um den Zugriffschlüssel zu verpacken, um die Daten für den Empfang durch die Datenbank zu erzeugen.

14. Verfahren nach Anspruch 12 oder 13, wobei das Vergleichen der empfangenen Daten das Durchführen einer ausschließlichen ODER-Operation zwischen der Signatur und den empfangenen Daten umfaßt.

15. Datenzugriffssystem, welches aufweist:

einen mit einer gespeicherten Zugriffstokensignatur assoziierten Datensatz,

einen Signaturgenerator, der so betreibbar ist, daß er

kohärente Strahlung nacheinander auf jeden aus einer Mehrzahl von Bereichen einer Oberfläche des Zugriffstokens steuert,

einen Satz sammelt, welcher Gruppen von Datenpunkten von Signalen beinhaltet, die erhalten werden, wenn die kohärente Strahlung von den verschiedenen Bereichen des Zugriffstokens gestreut wird, wobei verschiedene der Gruppen von Datenpunkten Streuung von den jeweiligen verschiedenen Bereichen des geschriebenen Berechtigungstokens entsprechen und wobei jede Gruppe von Datenpunkten Datenpunkte enthält, die unter verschiedenen Streuwinkeln relativ zu der Oberfläche des geschriebenen Berechtigungstokens gesammelt wurden, und

eine Signatur des Zugriffstokens aus dem Satz von Datenpunkten bestimmt, und

einen Komparator, der so betreibbar ist, daß er die erzeugte Signatur mit der gespeicherten Signatur vergleicht,

wobei das System so betreibbar ist, daß es den Datensatz verfügbar macht, falls es eine Übereinstimmung zwischen der gespeicherten Signatur und der erzeugten Signatur gibt

16. System nach Anspruch 15, wobei der Datensatz sensible Informationen beschreibt.

17. System nach Anspruch 15 oder 16, wobei der Datensatz wenigstens entweder Daten, die finanzielle Informationen beschreiben, Daten, die medizinische Informationen beschreiben, Daten, die Angestellteninformationen beschreiben, und Daten, die gesetzliche Informationen beschreiben, beinhaltet.

18. System nach Anspruch 15, 16 oder 17, wobei die Signatur für das Zugriffstoken das einzige Zugriffsverfahren auf den jeweiligen Datensatz repräsentiert.

19. System nach einem der Ansprüche 15 bis 18, wobei jede gespeicherte Signatur eine SIgnatur ist, die aus einer vorherigen Überprüfung eines Zugriffstokens erzeugt wurde.

20. System nach Anspruch 19, wobei das Feststellen einer Übereinstimmung zwischen der erzeugten Signatur und einer gespeicherten Signatur anzeigt, daß das gleiche Zugriffstoken verwendet wurde, um beide Signaturen zu erzeugen.

21. System nach einem der Ansprüche 15 bis 20, wobei das Zugriffstoken ein beliebiges Element bzw. ein beliebiger Gegenstand ist.

22. System nach einem der Ansprüche 15 bis 21, wobei das Zugriffstoken ein durch dessen Benutzer ausgewählter Gegenstand ist.

23. System nach Anspruch 22, wobei der Datensatz aus informationen betreffend den Benutzer des Zugriffstokens besteht oder diese beschreibt.

24. System nach einem der Ansprüche 15 bis 23, wobei der Komparator so betreibbar ist, daß er die erzeugte Signatur in Blöcke von zusammenhängenden Daten unterteilt und eine Vergleichsoperation zwischen jedem Block und jeweiligen Blöcken von irgendwelchen der gespeicherten Signaturen durchführt und ein Attribut eines Vergleichsergebnisses daraus mit einem erwarteten Attribut des Vergleichs vergleicht, um einen Kompensationswert zur Verwendung beim Bestimmen des Validierungsergebnisses zu bestimmen, um eine Beschädigung des Zugriffstokens und/oder Nichtlinearitäten bei der Erzeugung der Signatur zu kompensieren.

25. System nach einem der Ansprüche 15 bis 24, wobei ohne eine übereinstimmende Zugriffstokensignatur auf den Datensatz geschrieben werden kann.

26. Datenzugriffssystem, welches aufweist:

eine Mehrzahl von gespeicherten Datensätzen, auf die unter Verwendung jeweiliger Zugriffsschlüssel zugegriffen werden kann, eine gespeicherte Zugriffstokensignatur, einen Signaturgenerator, der so betreibbar ist, daß er

kohärente Strahlung nacheinander auf jeden aus einer Mehrzahl von Bereichen einer Oberfläche des Zugriffstokens steuert, einen Satz sammelt, welcher Gruppen von Datenpunkten von Signalen beinhaltet, die erhalten werden, wenn die kohärente Strahlung von den verschiedenen Bereichen des Zugriffstokens gestreut wird, wobei verschiedene der Gruppen von Datenpunkten Streuung von den jeweiligen verschiedenen Bereichen des geschriebenen Berechtigungstokens entsprechen und wobei jede Gruppe von Datenpunkten Datenpunkte beinhaltet, die unter verschiedenen Streuwinkeln relativ zu der Oberfläche des geschriebenen Berechtigungstokens gesammelt wurden, und eine Signatur des Zugriffstokens aus dem Satz von Datenpunkten bestimmt, eine Verpackungseinheit, die so betreibbar ist, daß sie einen Datenzugriffsschlüssel unter Verwendung der Signatur verpackt, eine Entpackungseinheit, die so betreibbar ist, daß sie den Zugriffsschlüssel unter Verwendung der gespeicherten Signatur entpackt, und eine Datenzugriffseinheit, die so betreibbar ist, daß sie einen mit dem entpackten Zugriffsschlüssel assoziierten Datensatz abruft.

27. Verfahren zum Zugreifen auf Daten, welches umfaßt:

Erzeugen einer Signatur aus einem Zugriffstoken durch:

Steuern kohärenter Strahlung nacheinander auf jeden aus einer Mehrzahl von Bereichen einer Oberfläche des Zugriffstokens, Sammeln eines Satzes, welcher Gruppen von Datenpunkten von Signalen beinhaltet, die erhalten werden, wenn die kohärente Strahlung von den verschiedenen Bereichen des Zugriffstokens gestreut wird, wobei verschiedene der Gruppen von Datenpunkten Streuung von den jeweiligen verschiedenen Bereichen des geschriebenen Berechtigungstokens entsprechen und wobei jede Gruppe von Datenpunkten Datenpunkte beinhaltet, die unter verschiedenen Streuwinkeln relativ zu der Oberfläche des geschriebenen Berechtigungstokens gesammelt wurden, und
Bestimmen einer Signatur des Zugriffstokens aus dem Satz von Datenpunkten,
Verpacken eines Datenzugriffsschlüssels unter Verwendung einer Signatur, die zuvor aus dem Zugriffstoken erzeugt wurde,

Übermitteln des verpackten Schlüssels an eine Datenbank von Datensätzen, wobei jeder Satz mit einem jeweiligen Datenzugriffsschlüssel assoziiert ist,
Entpacken des Datenzugriffsschlüssels unter Verwendung einer gespeicherten Signatur, die zuvor aus dem Zugriffstoken erzeugt wurde, und
Abrufen eines Datensatzes, der mit dem entpackten Datenzugriffsschlüssel assoziiert ist.

## Revendications

1. Procédé d'accès à un enregistrement de données, le procédé comprenant les étapes consistant à :

   créer une signature pour un jeton d'abcès

   en dirigeant un rayonnement cohérent séquentiellement sur chacune des régions parmi une pluralité de régions d'une surface du jeton d'accès ;
   en recueillant un ensemble comprenant des groupes de points de données provenant de signaux obtenus lorsque le rayonnement cohérent est diffusé à partir des différentes régions du jeton d'accès, des groupes différents parmi les groupes de points de données intéressant la diffusion à partir des différentes régions respectives du jeton d'autorisation écrit, et chaque groupe de points de données comprenant des points de données recueillis selon différents angles de diffusion par rapport à la surface du jeton d'autorisation écrit ; et
   en déterminant une signature du jeton d'accès à partir de l'ensemble de points de données ; comparer la signature à une base de données de signatures mémorisées, chaque signature mémorisée étant associée à un enregistrement de données ; et

   donner accès à l'enregistrement de données associé à une signature mémorisée considérée, en cas de correspondance entre ladite signature créée et la signature mémorisée.

2. Procédé selon la revendication 1, dans lequel l'enregistrement de données décrit des informations sensibles.

3. Procédé selon la revendication 1 ou 2, dans lequel l'enregistrement de données comprend au moins certaines des données suivantes : données décrivant des informations financières, données décrivant des informations médicales, données décrivant des informations de salariés et données décrivant des informations juridiques.

4. Procédé selon la revendication 1, 2 ou 3, dans lequel la signature du jeton d'accès représente le seul procédé d'accès à l'enregistrement de données respectif.

5. Procédé selon l'une quelconque des revendications précédentes, dans lequel chaque signature mémorisée est une signature créée lors d'un balayage antérieur d'un jeton d'accès.

6. Procédé selon la revendication 5, dans lequel la détermination d'une correspondance entre la signature créée et une signature mémorisée indique que le même jeton d'accès a été utilisé pour créer les deux signatures.

7. Procédé selon l'une quelconque des revendications précédentes, dans lequel le jeton d'accès est un article quelconque.

8. Procédé selon l'une quelconque des revendications précédentes, dans lequel le jeton d'accès est un article sélectionné par un utilisateur de celui-ci.

9. Procédé selon la revendication 8, dans lequel l'enregistrement de données est constitué d'informations ou décrit des informations intéressant l'utilisateur du jeton d'accès.

10. Procédé selon l'une quelconque des revendications précédentes, dans lequel la comparaison comprend les étapes consistant à :

    diviser la signature en blocs de données contiguës et exécuter une opération de comparaison entre chaque bloc et des blocs respectifs de certaines des signatures mémorisées ; et
    comparer un attribut d'un résultat de comparaison obtenu avec un attribut attendu de la comparaison, afin de déterminer une valeur de compensation à utiliser dans la détermination du résultat de la validation afin de compenser la détérioration du jeton d'accès et/ou des phénomènes de non-linéarité dans l'étape de capture.

11. Procédé selon l'une quelconque des revendications précédentes, dans lequel l'enregistrement de données peut être écrit sans signature de jeton d'accès correspondante.

12. Procédé selon l'une quelconque des revendications précédentes, dans lequel la comparaison de la signature comprend la comparaison de données reçues avec la base de données de signatures mémorisées, afin de trouver une correspondance, une correspondance étant représentée par un clef d'accès renvoyée.

13. Procédé selon la revendication 12, dans lequel la signature est utilisée pour envelopper la clef d'accès afin de créer les données à recevoir par la base de données.

14. Procédé selon la revendication 12 ou 13, dans lequel la comparaison des données reçues comprend l'exécution d'une opération OU exclusif entre la signature et les données reçues.

15. Système d'accès aux données comprenant :

un enregistrement de données associé à une signature de jeton d'accès mémorisée ;
un générateur de signatures, en mesure de :

diriger un rayonnement cohérent séquentiellement sur chacune des régions parmi une pluralité de régions d'une surface du jeton d'accès ;
recueillir un ensemble comprenant des groupes de points de données provenant de signaux obtenus lorsque le rayonnement cohérent est diffusé à partir des différentes régions du jeton d'accès, des groupes différents, parmi les groupes de points de données, intéressant la diffusion à partir des différentes régions respectives du jeton d'autorisation écrit et chaque groupe de points de données comprenant des points de données recueillis selon différents angles de diffusion par rapport à la surface du jeton d'autorisation écrit ; et
déterminer une signature du jeton d'accès à partir de l'ensemble de points de données ; et

un comparateur en mesure de comparer la signature créée avec la signature mémorisée ;
le système étant en mesure de fournir l'enregistrement de données en cas de correspondance entre la signature mémorisée et la signature créée.

16. Système selon la revendication 15, dans lequel l'enregistrement de données décrit des informations sensibles.

17. Système selon la revendication 15 ou 16, dans lequel l'enregistrement de données comprend au moins certaines des données suivantes : données décrivant des informations financières, données décrivant des informations médicales, données décrivant des informations de salariés et données décrivant des informations juridiques.

18. Système selon la revendication 15, 16 ou 17, dans lequel la signature du jeton d'accès représente le seul procédé d'accès à l'enregistrement de données respectif.

19. Système selon l'une quelconque des revendications 15 à 18, dans lequel chaque signature mémorisée est une signature créée lors d'un balayage antérieur d'un jeton d'accès.

20. Système selon la revendication 19, dans lequel la détermination d'une correspondance entre la signature créée et une signature mémorisée indique que le même jeton d'accès a été utilisé pour créer les deux signatures.

21. Système selon l'une quelconque des revendications 15 à 20, dans lequel le jeton d'accès est un article quelconque.

22. Système selon l'une quelconque des revendications 15 à 21, dans lequel le jeton d'accès est un article sélectionné par un utilisateur de celui-ci.

23. Système selon la revendication 22, dans lequel l'enregistrement de données est constitué d'informations ou décrit des informations intéressant l'utilisateur du jeton d'accès.

24. Système selon l'une quelconque des revendications 15 à 23, dans lequel le comparateur est en mesure de diviser la signature générée en blocs de données contiguës et d'exécuter une opération de comparaison entre chaque bloc et des blocs respectifs de certaines des signatures mémorisées ; et de comparer un attribut d'un résultat de comparaison obtenu avec un attribut attendu de la comparaison, afin de déterminer une valeur de compensation à utiliser dans la détermination du résultat de la validation afin de compenser la détérioration du jeton d'accès et/ou des phénomènes de non-linéarité dans la création de la signature.

25. Système selon l'une quelconque des revendications 15 à 24, dans lequel l'enregistrement de données peut être écrit sans une signature de jeton d'accès correspondante.

**26.** Système d'accès aux données comprenant :

une pluralité d'enregistrements de données mémorisés, accessibles à l'aide de clefs d'accès respectives ;
une signature de jeton d'accès mémorisée ;
un générateur de signatures, en mesure de :

diriger un rayonnement cohérent séquentiellement sur chacune des régions parmi une pluralité de régions d'une surface du jeton d'accès ;
recueillir un ensemble comprenant des groupes de points de données provenant de signaux obtenus lorsque le rayonnement cohérent est diffusé à partir des différentes régions du jeton d'accès, des groupes différents, parmi les groupes de points de données, intéressant la diffusion à partir des différentes régions respectives du jeton d'autorisation écrit, et chaque groupe de points de données comprenant des points de données recueillis selon différents angles de diffusion par rapport à la surface du jeton d'autorisation écrit ; et
déterminer une signature du jeton d'accès à partir de l'ensemble de points de données ;

une unité d'enveloppement en mesure d'envelopper une clef d'accès aux données à l'aide de la signature ;
une unité de désenveloppement en mesure de désenvelopper la clef d'accès à l'aide de la signature mémorisée ; et
une unité d'accès aux données en mesure d'obtenir un enregistrement de données associé à la clef d'accès désenveloppée.

**27.** Procédé d'accès aux données comprenant les étapes consistant à :

créer une signature à partir d'un jeton d'accès :

en dirigeant un rayonnement cohérent séquentiellement sur chacune des régions parmi une pluralité de régions d'une surface du jeton d'accès ;
en recueillant un ensemble comprenant des groupes de points de données provenant de signaux obtenus lorsque le rayonnement cohérent est diffusé à partir des différentes régions du jeton d'accès, des groupes différents, parmi les groupes de points de données, intéressant la diffusion des différentes régions respectives du jeton d'autorisation écrit et chaque groupe de points de données comprenant des points de données recueillis selon différents angles de diffusion par rapport à la surface du jeton d'autorisation écrit ; et
en déterminant une signature du jeton d'accès à partir de l'ensemble de points de données ;

envelopper une clef d'accès aux données en utilisant une signature créée antérieurement à partir du jeton d'accès ;
émettre la clef enveloppée vers une base de données stockant des enregistrements de données, chaque enregistrement de données étant associé à une clef d'accès aux données respective ;
désenvelopper la clef d'accès aux données en utilisant une signature mémorisée, créée antérieurement à partir du jeton d'accès ; et
obtenir un enregistrement de données associé à la clef d'accès aux données désenveloppée.

Fig. 1

Fig. 2

Fig. 3

Fig. 4

Fig. 5

Fig. 6A

Fig. 6B

Fig. 6C

Fig. 7A

Fig. 7B

Fig. 8A

Fig. 8B

Fig. 9A

Fig. 9B

Fig. 9C

33

```
                    ┌──────────────────┐
                    │    START SCAN    │
                    └──────────────────┘
                              │
                              ▼
S1 ─────────┐     ┌──────────────────────────┐
            └─────│   SCAN TO ACQUIRE DATA   │
                  └──────────────────────────┘
                              │
                              ▼
S2 ─────────┐     ┌──────────────────────────┐
            └─────│      LINEARISE DATA      │
                  └──────────────────────────┘
                              │
                              ▼
S3 ─────────┐     ┌──────────────────────────┐
            └─────│   DIFFERENTIATE & SMOOTH │
                  └──────────────────────────┘
                              │
                              ▼
S4 ─────┐     ┌──────────────────────────────────┐
        └─────│    COMPUTE AND SUBTRACT MEAN     │
              └──────────────────────────────────┘
                              │
                              ▼
S5 ─────────┐     ┌──────────────────────────┐
            └─────│    DIGITISE TO OBTAIN    │
                  │    DIGITAL SIGNATURE     │
                  └──────────────────────────┘
                              │
                              ▼
S6 ─────┐     ┌──────────────────────────────────┐
        └─────│  DIGITISE TO OBTAIN THUMBNAIL    │
              │        DIGITAL SIGNATURE         │
              └──────────────────────────────────┘
                              │
                              ▼
S7 ─────┐     ┌──────────────────────────────────┐
        └─────│   COMPUTE CROSS-CORRELATION      │
              │          COEFFICIENTS            │
              └──────────────────────────────────┘
                              │
                              ▼
S8 ─────────┐     ┌──────────────────────────┐
            └─────│     COMPUTE AVERAGE      │
                  │         VALUES           │
                  └──────────────────────────┘
                              │
                              ▼
                    ┌──────────────────┐
                    │     END SCAN     │
                    └──────────────────┘
```

Fig. 10

START VERIFY

V1 — SCAN ARTICLE (STEPS S1-S8)

V2 — SEARCH THUMBNAILS TO FIND HIT

V3 — PRE-SCREEN HIT USING AVERAGE VALUE

V4 — PRE-SCREEN HIT USING CROSS-CORRELATION COEFFICIENTS

V5 — ANALYSE DIGITAL SIGNATURE OF HIT

V6 — ISSUE RESULT

END VERIFY

Fig. 11

START

S21 — SCAN TO AQUIRE DATA

S22 — BREAK SCAN DATA INTO CONTIGUOUS BLOCKS

S23 — COMPUTE CROSS-CORRELATION COEFFICIENTS

S24 — COMPARE LOCATION OF CROSS-CORRELATION PEAKS TO EXPECTED LOCATION

S25 — FIT SELECTED FUNCTION TO COMPARED POSITIONS

S26 — CHECK DEVIATIONS FROM FUNCTION TO DETERMINE CHANGE PARAMETERS

S27 — STRETCH AND SHIFT SCANNED DATA TO COMPENSATE FOR CHANGE PARAMETERS

S28 — BREAK COMPENSATED SCAN DATA INTO CONTIGUOUS BLOCKS

S29 — COMPUTE CROSS-CORRELATION COEFFICIENTS

S30 — CALCULATE UNIQUENESS

END

Fig. 12

ACTUAL

Gradient = 1

EXPECTED

Fig. 13A

ACTUAL

Gradient ≠ 1

offset

EXPECTED

Fig. 13B

ACTUAL

EXPECTED

Fig. 13C

Fig. 14

**Fig. 15**

**Fig. 16**

100

DATABASE
ADMINISTRATOR

108

USER
TERMINAL

DATABASE

106

104

SCANNER

102

**Fig. 17**

100

DATABASE
ADMINISTRATOR

108

USER
TERMINAL

DATABASE

106

104

101

SCANNER
TERMINAL

SCANNER

102

**Fig. 18**

Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0303917 W, Cowburn
- GB 2221870 A
- US 6584214 B
- GB 0303938 W

**Non-patent literature cited in the description**

- **GERSHENFELD.** *Science,* 20 September 2002, vol. 297 (5589), 20026-2030
- **KRAVOLEC.** Plastic tag makes foolproof ID. *Technology research news,* 02 October 2002